# EUROPÄISCHE PATENTSCHRIFT

(11) **EP 3 953 442 B1**
(45) Veröffentlichungstag und Bekanntmachung des Hinweises auf die Patenterteilung: **09.07.2025**
(21) Anmeldenummer: 19720405.0
(22) Anmeldetag: 09.04.2019
(51) Int. Cl.: C11B 1/10, A23J 1/14

(54) **VERFAHREN UND VORRICHTUNG ZUR INDUSTRIELLEN GEWINNUNG VON RAPSKERNÖL UND RAPSPROTEINKONZENTRAT AUS RAPSSAAT**
METHOD AND DEVICE FOR INDUSTRIALLY OBTAINING RAPESEED KERNEL OIL AND RAPE PROTEIN CONCENTRATE FROM RAPESEED
PROCÉDÉ ET DISPOSITIF DE COLLECTE INDUSTRIELLE D'HUILE DE COLZA ET DE CONCENTRÉ DE PROTÉINES DE COLZA À PARTIR DE GRAINES DE COLZA

(43) Veröffentlichungstag der Anmeldung: 16.02.2022
(73) Patentinhaber: Euro-Protein GmbH, 37133 Friedland (DE)
(72) Erfinder: Neumüller, Waldemar, 37133 Friedland-Ballenhausen (DE)
(74) Vertreter: REHBERG HÜPPE + PARTNER
(86) Internationale Anmeldenummer: PCT/EP2019/058957
(87) Internationale Veröffentlichungsnummer: WO 2020/207565

(56) Entgegenhaltungen:
- EP-A1- 1 074 605
- US-A- 4 901 635
- US-A1- 2019 078 115

## Beschreibung

Die Erfindung bezieht sich auf ein Verfahren zur Verarbeitung von Körnern einer Rapssaat mit den Schritten: Schälen der Körner, wobei die Körner durch einen Walzenspalt zwischen Schälwalzen hindurchgeführt werden, Abtrennen von Schalen von einer schalenarmen Kornfraktion durch Sieben und/oder Windsichten, so dass die in der schalenarmen Kornfraktion verbleibenden Schalen nicht mehr als 4 Gewichtsprozent der schalenarmen Kornfraktion ausmachen, und Abpressen von kaltgepresstem Rapskernöl von der schalenarmen Kornfraktion, wobei ein Wassergehalt der schalenarmen Kornfraktion von 4 bis 7 Gewichtsprozent beträgt, wobei eine Kuchentemperatur in einem entstehenden Presskuchen auf 70°C begrenzt wird, wobei ein Restölgehalt auf 18 bis 28 Gewichtsprozent einer Trockenmasse des Presskuchens reduziert wird und wobei ein Teil des Presskuchens zurückgeführt, mit der schalenarmen Kornfraktion vor dem Abpressen vermengt und erneut abgepresst wird.

Raps (Brassica napus), einschließlich so genannter Null-, Doppelnull- und Plusnull-Rapssorten und Canola, ist nach der Sojabohne die kommerziell bedeutendste Ölsaat weltweit und stellt einen wertvollen Rohstoff für die Nahrungsmittelindustrie, die Futtermittelindustrie, die Biodieselproduktion und die Oleochemie dar. Im Gegensatz zur Sojabohne, die primär als Lieferant von pflanzlichem Eiweiß dient, wird Raps primär zur Ölgewinnung angebaut. Hauptsächlich wird Rapsöl zu Biodiesel und Speiseölen verarbeitet. Bei der Gewinnung von Rapsöl aus Rapssaat bleibt ein Rückstand zurück, der beim reinen Abpressen des Rapsöls als Rapskuchen und nach ggf. zusätzlicher Lösungsmittelextraktionen als Rapsschrot bezeichnet wird. Auch das nach zusätzlicher Lösungsmittelextraktion zurückbleibende Rapsschrot macht noch etwa 60 % des Ausgangsmaterials aus. Es fällt daher in großen Mengen an. Bei seiner Verwendung als Tierfutter ist anders als bei Sojaschrot kein Einsatz als Alleinfutter möglich. Toxine, antinutritive Inhaltsstoffe und der hohe Schalenanteil stehen einer Verwendung als Alleinfutter ebenso entgegen wie einer Verwendung in der Lebensmittelindustrie, obwohl das enthaltene Rapsprotein grundsätzlich eine Aminosäurezusammensetzung aufweist, die für die Verwendung in der Ernährung von Menschen und Tieren günstig ist. Entsprechend ist der Marktpreis für Rapsschrot deutlich geringer als derjenige von Sojaschrot. Zugleich besteht eine hohe Nachfrage nach für Ernährungszwecke geeigneten Proteinen, insbesondere aus nicht genveränderten Quellen. Ein großer Bedarf an solchen Proteinen besteht beispielsweise bei der Fischzucht in Aquakulturen und bei der Geflügelmast.

Um das in den Rückständen der Ölgewinnung aus Rapssaat enthaltene Rapsprotein zumindest als Futtermittel großtechnisch nutzbar zu machen, ist es erforderlich, die Toxine und andere störende Begleitstoffe zu reduzieren bzw. zu entfernen. Zudem sollte der Eiweißgehalt vorzugsweise auf das Maß von Sojaschrot und hieraus hergestelltem Sojaprotein-Konzentrat angehoben werden.

### STAND DER TECHNIK

Die Gewinnung von Öl aus Rapssaat erfolgt großtechnisch auf mechanischem und/oder chemischem Wege. Bei der mechanischen Gewinnung wird das Öl von den Körnern der Rapssaat heiß oder kalt abgepresst.

Nach allgemeiner Ansicht fällt sogenanntes kaltgepresstes Rapskernöl an, wenn beim Abpressen Temperaturen unter 50 °C eingehalten werden. Der Codex Alimentarius definiert kalt gepresstes Öl jedoch so, dass beim Abpressen keine Wärme zugeführt wird. Mit der Definition des Codex Alimentarius kann der Restölgehalt eines beim Abpressen von Rapssaat entstehenden Presskuchens bis auf etwa 15 Gewichtsprozent seiner Trockenmasse reduziert werden.

Nach den Leitsätzen für Speisefette und Speiseöl, Deutsches Lebensmittelbuch, Bundesministerium für Ernährung und Landwirtschaft BMEL, werden für kaltgepresstes Öl Trans-Fettsäuren von nicht mehr als 0,2 % gefordert. Werte über 0,2 % Trans-Fettsäuren weisen auf Hitzeschäden hin.

Durch Abpressen auch bei höheren Temperaturen, wobei jedoch kein kaltgepresstes Rapskernöl mehr anfällt, kann der Restölgehalt im Presskuchen weiter abgesenkt werden.

Wenn die Körner der Rapssaat vor dem Abpressen geschält werden, um einen schalenfreien Presskuchen zu erhalten, liegt der Restölgehalt des Presskuchens, wenn nur kalt abgepresst wird, aufgrund fehlender Friktion durch die Schalen signifikant über 15 Gewichtsprozent. Daher wird einer ersten Kaltpressung häufig eine zweite Heißpressung bei erhöhter Temperatur nachgeschaltet, um die Ausbeute an Öl zu steigern.

Schalenhaltige Presskuchen werden mit Hexan nachextrahiert, wobei der Restölgehalt bis auf unter 1 Gewichtsprozent reduziert wird und Rapsschrot zurückbleibt, das nur eine begrenzte Wertigkeit aufweist.

Presskuchen, die beim Abpressen kaltgepresster Öle zurückbleiben, werden vielfach nicht mit Lösungsmitteln nachextrahiert, da dies aufgrund der notwendigen Investitionskosten und Sicherungsanforderungen für kleinere Ölmühlen unwirtschaftlich wäre.

Um die Öle einer Heißpressung oder der Hexan-Extraktion lebensmittelfähig zu machen, muss ein Raffinationsprozess folgen.

Aus der DE 40 41 994 A1 sind ein Verfahren und eine Anordnung zur Rapsschälung bekannt, bei denen eine kombinierte Druck- und Schlagprallbehandlung der Körner der Rapssaat erfolgt, um den Schalenanteil auf weniger als 5 % abzusenken. Bei dem bekannten Verfahren werden nach der Reinigung der Körner folgende Schritte durchgeführt: Klassierung der Körner und Abtrennung von Mindergrößen, Reduzieren der Feuchtigkeit der Körner durch Trocknung, Druckbehandlung durch Walzen mit einem Walzenspalt, der das 0,2- bis 0,4-fache des mittleren Saatgutdurchmessers beträgt, Schlagpralllösen der aufgebrochenen Schalen von den Kernen der Körner durch pneumatische Förderung, Windsichtung sowie Sichtung und Trennung der Schalen von den Kernen durch Elektroseparation. Hierfür werden bei der bekannten Anordnung ein Saatbunker, eine Waage, ein Eisenausscheider, ein Klassierdeck, ein Trockner, ein Walzenschäler, ein Zyklon, ein Windsichter und ein Elektroabscheider in Reihe geschaltet. An die Rapsschälung kann sich eine Gewinnung von Rapskernöl aus den Kernen anschließen.

Die DE 40 41 994 A1 geht davon aus, dass die Körner die für das Schälen gewünschte reduzierte Feuchtigkeit durch Lagern für mehr als 3 Monaten erreichen oder frische Rapssaat zur Trocknung auf eine Temperatur von 95 °C erhitzt wird. Lange Lagerzeiten erfordern eine hohe Lagerkapazität mit entsprechenden Investitionen in große Lagersilos, was unwirtschaftlich ist und dennoch nicht sicherstellt, dass die Rapssaat einheitlich und gleichmäßig in allen Anteilen die geeignete Feuchtigkeit für das Schälen aufweist. Um eine reproduzierbare und durchgängige Produktion aufrechtzuerhalten, ist es unabwendbar, die Saat kontrolliert und reproduzierbar zu trocken. Bei 95 °C erfolgt dies bei einer Temperatur, bei der die Denaturierung von Rapsprotein eintritt, siehe z. B. Master Thesis Sofia Dahlberg, Lunds Universitet Sweden, 2017, "An investigation of rapeseed protein as a new food product".

Um das Schälen effektiv zu machen, ist das anschließende Schlagpralllösen der aufgebrochenen Schalen erforderlich. Durch das Schlagpralllösen wird zusätzlicher Druck auf die geschälten Kerne ausgeübt, wobei durch den Druck beim Aufprall Öl aus den Kernen an deren Oberfläche tritt und ein Abtrennen der Schalen erschwert. So bleibt an den Schalen noch ein hoher Anteil an gebrochenen Kernen haften. Ein Abtrennen der Kerne von den losen Schalen erfolgt über Zyklone, Windsichter und Elektroseparation, wobei die Aufgabe der Windsichter darin besteht, ungeschälte Körner abzuscheiden.

Zur eigentlichen Abtrennung der Schalen dient die Elektroseparation, die bis heute in der großtechnischen Rapsverarbeitung keine Anwendung gefunden hat, da mit dem erforderlichen Hochspannungsfeld erhebliche Probleme verbunden sind und die Schalenabtrennung bei hohen Durchsätzen an Effektivität verliert.

Aus der EP 1 074 605 A1 sind ein Verfahren und eine Einrichtung zur Herstellung von Speiseöl aus Rapssaat bekannt. Dabei wird die Rapssaat durch Klassieren in Fraktionen verschiedener Partikelgrößen getrennt. Die gereinigte und klassierte Rapssaat wird bei unter 40 °C getrocknet. Die getrocknete Rapssaat wird gebrochen. Die gebrochene Rapssaat wird in drei Fraktionen verschiedener Partikelgrößen getrennt, von denen eine Nutzbruch genannte Fraktion in Schälraps und Schalen zerlegt wird. Der Schälraps wird befeuchtet und anschließend flockiert. Danach wird der Schälraps in einer Presse kalt verpresst, um kaltgepresstes Rapskernöl zu gewinnen. Ein beim Filtern des kaltgepressten Rapskernöls anfallender Filterkuchen wird auf die Presse zurückgeführt. Der beim Abpressen in der Presse anfallende Presskuchen kann ebenso wie die anderen Nebenprodukte des bekannten Verfahrens als Futtermittel verwendet werden. Alternativ wird eine energetische Nutzung der abgetrennten Nebenprodukte, insbesondere der Schalenfraktionen, vorgeschlagen.

Nachteile dieses bekannten Verfahrens bestehen darin, dass einerseits das Trocknen der Rapssaat bei Temperaturen unter 40 °C erfolgen soll und damit eine große Trocknungsanlage mit hohem Raumbedarf notwendig macht und andererseits beim Brechen der getrockneten Rapssaat drei Fraktionen entstehen, die klassiert werden müssen. Die Klassierung setzt also nach der Reinigung nochmals bei der gebrochenen Rapssaat an.

Von den drei Fraktionen wird zudem nur der Schälraps des Nutzbruchs weiterverwendet. Alle anderen Bestandteile der Rapssaat werden zusammen mit den Schalen des Nutzbruchs entsorgt, was den Prozess unwirtschaftlich macht, da der größte Teil der Rapssaat nicht für die Ölgewinnung genutzt wird.

Die WO 2011/029611 A2 beschreibt ein Verfahren zur Bearbeitung von Körnern von Rapssaat, wobei diese geschält und in Kernanteile einerseits und Schalenanteile andererseits getrennt werden und wobei die Kernanteile zur Ölgewinnung einer oder mehreren Pressungen unterzogen werden. Das Verfahren wird so durchgeführt, dass ein bei der Ölgewinnung verbleibender feststoff- und ölhaltiger Presskuchen direkt oder nach einem weiteren Mahlschritt als Grund-, Füll- oder Zugabestoff für Humanlebensmittel ausgegeben wird. Bei der Ausgabe eines Grundstoffs für Humanlebensmittel kann der schalenfreie Presskuchen vermahlen werden. Das Mahlgut kann durch Extraktion entölt werden und danach als Basis für eine Proteinkonzentration und/oder Proteinisolation dienen.

Aus der WO 2011/161665 A1 ist ein Verfahren zur Herstellung von Sojaproteinkonzentrat aus weißen Sojabohnenflocken bekannt. Die Sojabohnenflocken werden mit Hexan in einem kontinuierlich arbeitenden Hexanextraktor zur Entfernung von Öl extrahiert. Die Flocken werden nach dem partiellen Strippen des Hexans in einen wässrigen Alkoholextraktor überführt, um das Resthexan, Zucker und anderes alkohollösliches Material zu extrahieren.

Aus der US 4 158 656 A ist ein Verfahren zum Herstellen eines entgifteten Proteinkonzentratprodukts aus entfetteter Ölsaat, insbesondere Rapssaat, bekannt. Dabei werden die Körner der Ölsaat auf unter 6 % Feuchtigkeit getrocknet, geschält, anschließend weiter auf 1 bis 3 % Feuchtigkeit getrocknet und dann mit Hexan entölt. Die geschälten und entölten Körner der Ölsaat werden dann mit einem wässrigen Alkohollösungsmittel, bevorzugt Isopropanol mit zugesetztem Bisulfit, unter nicht oxidierenden Bedingungen extrahiert, und der Feststoffrückstand der Extraktion wird bei Temperaturen unter 60 °C getrocknet.

Von Nachteil ist bei diesem bekannten Verfahren, dass die Pflanzenzellen der geschälten Körner nicht durch Pressen aufgebrochen werden, um das Öl leichter und vollständig extrahieren zu können. Ferner wird die Hexan-Extraktion direkt mit den geschälten Körnern gestartet, was eine ausreichende Entölung erheblich erschwert und zu langen Extraktionszeiten führt. Ferner wird kein hochwertiges kaltgepressten Rapskernöl erhalten, und der Zusatz eines Antioxidans ist notwendig. Kaltgepresste native Öle dürfen keine solchen Zusätze enthalten.

Aus der EP 1 228 701 A1 ist ein Verfahren zur Gewinnung von nativen, organischen Stoffen, insbesondere Ölen, Fetten, Wachsen, Farbstoffen, Vitaminen und/oder anderen lipophilen Stoffen und deren Derivaten aus nativen Stoffmengen mithilfe der Zentrifugalkraft bekannt. Dazu wird ein Ausgangsprodukt zerkleinert, aus dem zerkleinerten Ausgangsprodukt werden die lipophilen Stoffe mithilfe eines Extraktionsmittels extrahiert, und der Brei wird in einem Zentrifugalfeld in eine wässrige, feste Bestandteile enthaltene Phase und eine flüssige, organische Phase aufgetrennt, welche die hydrophoben Stoffe enthält.

Aus der WO 2010/096943 A2 ist ein Verfahren zur Herstellung eines Proteinpräparats aus Rapssaaten bekannt, das ein Schälen der Körner der Rapssaat, eine mechanische Entölung, in welcher nur ein Teil des Öls abgetrennt wird und welche bei einer über die Zeitdauer des Pressvorgangs gemittelten Temperatur von unter 80 °C durchgeführt wird, und eine Extraktion umfasst. In der mechanischen Entölung, die bei einer über die Zeitdauer des Pressvorgangs gemittelten Temperatur von unter 80 °C durchgeführt wird, wird nur ein Teil des Öls abgetrennt. In der Extraktion werden Proteinfremdstoffe aus dem Proteinmehl abgereichert. Der Extraktion ist eine Aufbereitung in der Korngröße nachgeschaltet, um ein Schüttgut mit einer vorgegebenen Korngrößenverteilung zu erhalten. Konkret beginnt das bekannte Verfahren mit einer Schälung der Körner der Rapssaat durch Aufschluss in einer Schlagmühle und Auftrennung in eine kernreiche Grobfraktion und eine schalenreiche Feinfraktion im Luftstrom in einem Zick-Zack-Sichter. Die Kernfraktion wird dann in einer Schneckenpresse bei Temperaturen zwischen 30 und 45 °C auf einen Restölgehalt von ca. 23 Gewichtsprozent kalt abgepresst, wobei der Presskuchen in Form von zusammengepressten Strängen, Presskuchen-Pellets genannt, erhalten wird. Die Presskuchen-Pellets werden mit Hexan in einer Soxhlet-Apparatur auf einen Restölgehalt unter 3 % entölt. Dann wird das Lösungsmittel im Luftstrom bei Raumtemperatur entfernt. Die so erhaltenen extrahierten Proteinmehl-Pellets werden ohne weitere Zerkleinerung mit einer Ethanol-Lösung im Perkolationsverfahren behandelt. Das dadurch anfallende fertige Proteinkonzentrat wird mit oder ohne nachfolgende Zerkleinerung verwendet.

Die WO 2010/096943 A2 geht davon aus, dass die Rapssaat schon bei ihrer Einlagerung bei Temperaturen von unter 95 °C, bevorzugt unter 40 °C getrocknet wird, wobei es das Ziel ist, eine Enzyminaktivierung und eine begrenzte Proteindenaturierung zu erreichen. Temperaturen unter 40 °C lösen jedoch weder eine Enzyminaktivierung noch eine Proteindenaturierung aus. Anschließend werden die Körner der Rapssaat in einer Mühle in eine Kern- und eine Schalenfraktionen zerlegt, wobei die Schalen durch Platzen und nicht durch gezieltes Brechen aufgehen.

In der mechanischen Entölung, die bei einer über die Zeitdauer des Pressvorgangs gemittelten Temperatur von unter 80 °C durchgeführt wird, wird in dem Rapskernöl eine Grenztemperatur von 40 °C überschritten, die nach herkömmlicher Meinung für gutes kaltgepresstes Rapskernöl einzuhalten ist (http://en.foodlexicon.org/r0000680.php).

Neben seiner direkten Verwendung kann der Presskuchen am Ausgang der Pressschnecke zu Pellets verpresst werden. Weiche Ölsaaten, wie beispielsweise geschälte Rapssaat lassen sich wegen fehlender Friktion des entstehenden Presskuchens nur langsam und mit geringer Leistung abpressen. Wenn der Ausgang einer Schneckenpresse durch eine Pellet-Matrize teilweise verschlossen ist, werden der innere Druck und der Widerstand in der Schneckenpresse erhöht, so dass die gequetschte weiche Ölsaat kaum mehr durch die Pressschnecke der Schneckenpresse transportiert werden kann. Dadurch treten Teile der Ölsaat mit dem abgepressten Öl durch den Siebmantel der Schneckenpresse aus und verunreinigen das Öl.

Wie die WO 2010/096943 A2 selbst berichtet, werden zudem bereits beim Verpressen des Presskuchens zu Pellets mit einem Restölgehalt unter 17 % Verfärbungen sichtbar, was auf eine erhebliche Proteindenaturierung hinweist. Wenn der Presskuchen gemäß der WO 2010/096943 A2 dennoch einen Restölgehalt von nur mindestens 10 % aufweist, ist von einer ganz erheblichen Proteindenaturierung auszugehen.

Um eine von der WO 2010/096943 A2 geforderte Reinheit der geschälten Kerne von unter 5 % bzw. 1 % zu erreichen, muss beim Windsichten mit erheblichen Kernverlusten gerechnet werden, da leichte Kerne und gewichtsgleiche Schalenhaufen gemeinsam ausgetragen werden. Die mit den Schalen ausgetragenen Kernteile stehen dem Gesamtprozess nicht mehr zu Verfügung stehen und verschlechtern die Rentabilität des bekannten Verfahrens. Eine großtechnische Umsetzung des bekannten Verfahrens ist bislang nicht erfolgt.

Aus der DE 40 35 349 A1 sind ein Verfahren und eine Anordnung zur Gewinnung von Öl aus Leguminosen- und Ölsaaten bekannt, bei der Körner beispielsweise von Rapssaat durch eine Plättchenherstellung aufbereitet werden, auf die ein Anfeuchten dieser Plättchen mit daran anschließender Expandierung bei 105 bis 125 °C mit anschließender Kühlung unter 100 °C und Trocknung sowie ein Abpressen bei Temperaturen < 100 °C auf einen Restölgehalt von 15 bis 25 % folgen. Ein beim Abpressen entstehender Presskuchen wird bei Temperaturen von ca. 65 °C extrahiert.

Dieses bekannte Verfahren geht von ungeschälten Leguminose- und Ölsaaten aus. Diese werden ohne vorheriges Kaltabpressen einer Expander-Behandlung bei Temperaturen von 105-125 °C unterzogen. Erst nach Abkühlen des expandierten Materials auf 65 °C wird das Öl abgepresst. Damit hat der Expander die Funktion eines Zellaufschlusses durch Kochen, um das Abpressen des Öls zu erleichtern.

Nachteilig ist, dass damit die Herstellung von hochwertigem kaltgepresstem Kernöl aus schalenarmer Leguminose- und Ölsaat nicht möglich ist. Außerdem tritt bei den eingesetzten Temperaturen eine Proteindenaturierung auf, was eine weitere Reinigung und Gewinnung von Proteinen erschwert.

Aus der DE 35 29 229 C1 sind ein Verfahren und eine Vorrichtung zur thermischen Konditionierung von Ölsaaten und Ölfrüchten, insbesondere Leguminosesamen, für die Gewinnung von Ölen und Fetten einerseits und einem als Kraftfutter geeigneten öl- bzw. fettfreien Schrot andererseits bekannt. Dabei werden die gereinigten, getrockneten und zerkleinerten Ölsaaten und Ölfrüchte im Anschluss an eine vorausgegangene Glattwalzung kurzzeitig bei überatmosphärischem Druck in einer luft- bzw. sauerstofffreien Atmosphäre auf Temperaturen über 105 bis 148 °C erhitzt und anschließend bei gleichzeitiger Abkühlung auf Temperaturen unterhalb 100 °C schlagartig entspannt. Dadurch wird erreicht, dass die Ureaseaktivität im Schrot weitgehend inhibiert ist und die Proteine insgesamt sowie deren Wasserlöslichkeit in erheblichem Maße erhalten bleiben. Die bekannte thermische Konditionierung kann im Anschluss an eine Pressung und vor einer Extraktion erfolgen, bei der eine Extraktionstemperatur von 50 bis 65 °C eingestellt wird. Für Rapssaat wird konkret vorgeschlagen, die glattgewalzten Körner zunächst unter relativ milden Bedingungen thermisch zu konditionieren, dann das warme Material unter Gewinnung von Rapskernöl abzupressen und den Presskuchen bei gesteigerten Bedingungen erneut thermisch zu konditionieren, abzukühlen sowie schließlich in bekannter Weise zu extrahieren. Hierdurch soll es gelingen, den Ölgehalt der Schalen optimal zu gewinnen und eine klare Trennung von gepresstem Rapskernöl aus den Kernen und extrahiertem Öl aus den Schalen zu erreichen.

Bei diesem bekannten Verfahren werden nur ungeschälte Ölsaaten verwendet. Der Expander ersetzt einen der Extraktion vorgeschalteten Kochvorgang. Hochwertige kalt-gepresste Kernöle werden nicht erhalten. Die hohen Temperaturen führen bei Raps zur Proteindenaturierung.

Die EP 2 783 576 A1 beschreibt ein Verfahren zur Herstellung von Rapsproteinkonzentrat durch Verarbeiten von Körnern einer Rapssaat. Die Körner werden geschält, um eine Rapskernfraktion zu erhalten. Die Rapskernfraktion wird in einer Schneckenpresse teilweise entölt. 5 bis 60 % eines dabei entstehenden proteinhaltigen Presskuchens werden zurückgeführt und mit der Rapskernfraktion vor der Schneckenpresse vermischt, um die Reibung und den Druck in der Schneckenpresse zu erhöhen. Der Rest des proteinhaltigen Presskuchens wird mit einer wässrigen Alkohollösung gewaschen, um Zucker, Gerbstoffe, Sinapine und Glukosinolate zumindest teilweise zu entfernen und um ein Rapskuchenproteinkonzentrat mit einem Restölgehalt von 5 bis 25 % (w/w) zu produzieren. Das Rapskuchenproteinkonzentrat wird bei Temperaturen im Bereich von 60 bis 120 °C getrocknet, bis sein Wassergehalt niedriger als 10% ist. Die Rapskernfraktion kann vorab bis auf 70 °C erwärmt werden.

Der EP 2 783 576 A1 ist nicht zu entnehmen, in wieweit der Presskuchen direkt oder gebrochen der Rapskernfraktion zugegeben und wieweit hierdurch die Leistung der Pressung erhöht wird.

Der Anteil der Schalen beim Abpressen von Öl von ungeschältem Raps beträgt ca. 15 %. Durch die Schalen wird beim Abpressen in einer Schneckenpresse die Friktion aufgebaut, die erforderlich ist, um einen hohen Druck aufzubauen und damit eine hohe Pressleistung zu erreichen. Da die EP 2 783 576 A1 einen Schalenanteil der Rapskernfraktion mit 1 bis 10 % angibt, ist aus der Menge des zurückgeführten Presskuchens zu folgern, dass die Erhöhung der Friktion durch den zurückgeführten Presskuchen nicht sehr effektiv ist. Das günstigste konkrete Rückführverhältnis ist mit 1: 0,25 angegeben, wobei der Presskuchen vor der Pressung auf 70 °C erwärmt wird. Dabei kommen auf 1 Tonne Rapskernfraktion 250 kg Presskuchen, was in der abzupressenden Masse dann ca. 20 % Presskuchen zusätzlich zu den 1 bis 10 % Schalen entspricht. Anders gesagt kompensieren 20 % Presskuchen einen Verlust von etwa 5 bis 10 % Schalen, der beim Schälen der Körner eintritt.

Als Nachteil ist zu sehen, dass durch den immer wieder zurückgeführten Presskuchen die erhebliche Gefahr einer Verkeimung der Schneckenpresse besteht. Die Temperatur des Presskuchens bleibt so niedrig, dass keine Pasteurisierung des Presskuchens erfolgt. Eine Verkeimung der Schneckenpresse führt zu einer Toxin-Belastung des Presskuchens und zu einer Verschleppung der Keime und Toxine in alle Produkt des bekannten Verfahrens.

Selbst wenn anschließend mit der Alkohol-Wasser-Extraktion die Verkeimung des Presskuchens aufgehoben wird, bleibt die Gefahr einer Toxinbelastung bestehen. Um die Verkeimung und die Toxinbelastung auszuschließen, ist die Schneckenpresse häufig zu reinigen und zu desinfizieren, was jeweils einen Stillstand der Produktion bedeutet. Dadurch ist die industrielle Anwendbarkeit des bekannten Verfahrens eingeschränkt.

Zusätzlich erfüllt der Proteingehalt des Rapskuchenproteinkonzentrats nicht die von Sojaproteinkonzentrat abgeleitete Definition eines Proteinkonzentrats, die einen Proteingehalt bezogen auf die Trockensubstanz von über 60 % fordert. Aufgrund des geringeren Proteingehalts des Rapskuchenproteinkonzentrats handelt es sich nur um ein Rapsproteinmehl.

Aus der US 2019/ 0 078 115 A1 ist es bekannt, Sojabohnen auf 82 °C zu erhitzen, bis sie nur noch 9 % Feuchtigkeit enthalten, die Sojabohnen aufzubrechen, um Schalen durch Absaugen zu entfernen, die Rückstände zu Flocken einer Dicke von 1,2 bis 1,6 mm zu walzen, mit Hilfe von mechanischem Druck und Dampf Collets zu erzeugen, die Collets mit Hexan zu waschen, um die Fette zu verdünnen, die Fette durch Erhitzen auf 100 °C zu verdampfen und die Fette zu rekuperieren, um Sojabohnenöl zu produzieren, und die Collets nach dem Entfernen des Hexans zu verpressen, um ein Sojamehl oder einen Sojafutterkuchen zu produzieren.

Aus der US 4 901 635 A ist ein Extruder zum Behandeln von hochölhaltigem Material wie bestimmten Ölsaaten bekannt, der verwendet wird, um das Material für eine spätere Lösungsmittelextraktion von Öl aus dem Material vorzubereiten. Das Material wird mit Wasserdampf versetzt, unter Druck gesetzt und anschließend auf atmosphärischen Druck entspannt, wobei sich durch Verdampfen des Feuchtegehalts ein poröses Material ergibt, das für eine Lösungsmittelextraktion gut geeignet ist.

### AUFGABE DER ERFINDUNG

Der Erfindung liegt die Aufgabe zugrunde, ein stabiles, reproduzierbares und durchlaufendes Verfahren und eine Vorrichtung zu dessen Durchführung aufzuzeigen, mit denen aus Rapssaat kostengünstig neben hochwertigem kaltgepresstem Rapskernöl proteinhaltige Produkte erhalten werden, die zu hochwertigem Futter- und Nahrungsmitteln weiterverarbeitet werden können, wobei eine großtechnische Umsetzbarkeit des Verfahrens und der Vorrichtung sichergestellt ist.

### LÖSUNG

Die Aufgabe der Erfindung wird durch ein Verfahren mit den Merkmalen des unabhängigen Patentanspruchs 1 und durch eine Vorrichtung mit den Merkmalen des Patentanspruchs 12 gelöst. Bevorzugte Ausführungsformen des erfindungsgemäßen Verfahrens und der erfindungsgemäßen Vorrichtung sind in den abhängigen Patentansprüchen definiert.

### BESCHREIBUNG DER ERFINDUNG

Bei dem erfindungsgemäßen Verfahren zur Verarbeitung von Körnern einer Rapssaat werden die Körner geschält, wobei sie durch einen Walzenspalt zwischen Schälwalzen hindurchgeführt werden, und werden Schalen von einer schalenarmen Kornfraktion durch Sieben und/oder Windsichten abgetrennt, so dass die in der schalenarmen Kornfraktion verbleibenden Schalen nicht mehr als 4 Gewichtsprozent der schalenarmen Kornfraktion ausmachen. Von der schalenarmen Kornfraktion wird kaltgepresstes Rapskernöl abgepresst, wobei ein Wassergehalt der schalenarmen Kornfraktion von 4 bis 7 Gewichtsprozent beträgt, wobei eine Kuchentemperatur in einem entstehenden Presskuchen auf 70 °C begrenzt wird und wobei ein erster Restölgehalt auf 18 bis 28 Gewichtsprozent einer Trockenmasse des Presskuchens reduziert wird. Zu dem Presskuchen wird gespannter Wasserdampf zugeführt, und der Presskuchen wird anschließend zu Collets expandiert, wobei der Wasserdampf so dosiert wird, dass der Presskuchen unter Einwirkung des Wasserdampfs vorübergehend auf über 100 °C erwärmt wird und die Collets nach dem Expandieren eine Temperatur von 80 °C bis 95 °C aufweisen. Die Collets werden mit einem organischen Lösungsmittel extrahiert, wobei ein zweiter Restölgehalt auf 2 Gewichtsprozent oder weniger einer Trockenmasse der Collets reduziert wird. Nach dem Expandieren wird ein Teil der Collets zurückgeführt, mit der schalenarmen Kornfraktion vor dem Abpressen vermengt und erneut abgepresst.

Bei dem erfindungsgemäßen Verfahren wird durch das Zurückführen eines Teils der Collets die Friktion der schalenarmen Kornfraktion beim Abpressen erhöht und damit das Begrenzen der Kuchentemperatur in dem entstehenden Presskuchen auf 70 °C trotz des Reduzierens des ersten Restölgehalt auf 18 bis 28 Gewichtsprozent der Trockenmasse des Presskuchens zumindest erheblich erleichtert. Dieses Zurückführen eines Teils des Presskuchens kann auch notwendig sein, um trotz des Reduzierens des ersten Restölgehalt auf 18 bis 28 Gewichtsprozent der Trockenmasse des Presskuchens die Kuchentemperatur in dem entstehenden Presskuchen überhaupt auf 70 °C begrenzen zu können.

Bei dem erfindungsgemäßen Verfahren werden die Körner der Rapssaat vor dem Abpressen des kaltgepressten Rapskernöls geschält. Entsprechend weist der durch das Abpressen erhaltene Presskuchen und weisen auch die durch das Expandieren des Presskuchens erhaltenen Collets nur wenige Schalen auf. Hieraus resultiert neben einer gewissen Qualitätssteigerung bei dem kaltgepressten Rapskernöl insbesondere eine erhebliche Steigerung der Wertigkeit der Collets. Diese Collets wären bereits als solche als Tierfutter verwendbar. Sie sind durch das Erwärmen des Presskuchens hygienisch unbedenklich und weisen dennoch durch die kurze Zeit dieses Erwärmens eine günstige Aminosäurezusammensetzung mit allenfalls geringen unerwünschten Denaturierungen auf.

Insbesondere weisen die Collets eine für ihre weitere Aufbereitung, wie sie im Folgenden erläutert werden wird, günstige zusammenhängende, aber offene Struktur auf, die über ihre Aufbereitung hinweg erhalten werden kann.

Das erfindungsgemäße Verfahren kann, falls erforderlich, mit einer Reinigung der Körner der Rapssaat beginnen, um Verunreinigungen wie Steine oder Spreu zu entfernen. Die so gereinigten Körner können einer Klassierung nach Korngrößen unterworfen werden, um Körner abzutrennen, die für das anschließende Schälen der Körner nicht gut geeignet sind. Konkret können Körner kleiner als eine Mindestgröße zwischen 1,2 mm und 1,8 mm, vorzugsweise von etwa 1,4 mm, und größer als eine Maximalgröße zwischen 2,6 und 3,0 mm, vorzugsweise von etwa 2,8 mm, abgetrennt werden. Dabei können die die Maximalgröße überschreitenden Körner mit einer auf ihre Korngröße abgestimmten Vorrichtung getrennt geschält, und die Körner mit einer Korngröße unterhalb der Mindestgröße anderweitig verwendet werden. Typischerweise liegt der Anteil kleiner Körner unter 8 Gewichtsprozent, oftmals unter 4 Gewichtsprozent.

Bereits zuvor oder anschließend werden die Körner für das Schälen auf einen Feuchtigkeitsgehalt zwischen 4 und 7 Gewichtsprozent, vorzugsweise von etwa 5 Gewichtsprozent, eingestellt und dazu bedarfsweise getrocknet. Die Trocknungstemperatur sollte ggf. so gewählt werden, dass eine Korntemperatur von 70 °C, vorzugsweise von 65 °C, nicht überschritten wird, um eine Proteindenaturierung beim Trocknen zu vermeiden. Zum Brechen der Schalen werden die Körner durch einen Walzenspalt zwischen Schälwalzen hindurchgeführt, der typischerweise mindestens 20 % kleiner als die Mindestgröße der Körner ist. Die Körner können auch nacheinander mehrere Walzenspalte mit abnehmenden Größen durchlaufen.

Anschließend werden die zwischen den Schälwalzen gebrochenen Körner durch Sieben und/oder Windsichten, wozu auch eine Aspiration der Schalen zählt, in die schalenarme Kornfraktion und eine schalenreiche Kornfraktion getrennt. Die dabei in der schalenarmen Kornfraktion verbleibenden Schalen machen nicht mehr als 4 Gewichtsprozent aus. Vorzugsweise betragen sie nicht mehr als 3,5 Gewichtsprozent.

Beim Windsichten kann eine Ausbeute der schalenarmen Kornfraktion von typischer Weise mehr als 75 % und vorzugsweise etwa 80 % erreicht werden. Die schalenreiche Kornfraktion ist komplementär zu der schalenarme Kornfraktion, so dass die Ausbeute an schalenreicher Kornfraktion zwischen 20 % und 25 % der eingesetzten Rapsmenge beträgt.

In der schalenreichen Kornfraktion finden sich noch Kerne, die bis zu 40 Gewichtsprozent der schalenreichen Kornfraktion ausmachen können. Daher wird die schalenreiche Kornfraktion sinnvoller Weise weiter aufbereitet. Dies kann durch bekannte Verfahren wie Abpressen von Öl bei Temperaturen über 90 °C oder Lösungsmittelextraktion der schalenreichen Kornfraktion insbesondere mit Hexan erfolgen. Alternativ kann die schalenreiche Kornfraktion mit Wasser von etwa 20 bis 30 °C, d. h. Raumtemperatur oder ca. 25 °C, versetzt werden, das eine Quellung der in den Kernen enthaltenen Fasern und damit eine Flotation der Kerne auslöst, um eine weitere schalenarme Kornfraktion zu gewinnen.

Aufgrund einer anderen Morphologie tritt die Quellung bei den in den Schalen enthaltenen Fasern nicht oder zumindest nicht in demselben Maße auf. Zudem unterscheiden sich die Kerne von den Schalen durch einen höheren Ölgehalt. Nach der Quellung der Fasern in den Kernen, weisen die Kerne eine geringere Dichte als Wasser auf, während die Schalen weiterhin eine höhere Dichte als Wasser haben. Entsprechend tritt eine Flotation der Kerne auf, wobei die Flotation und die damit einhergehende Trennung von Kernen und Schalen durch Einleitung feiner Gasblasen und/oder leichtes, scherungsarmes Rühren unterstützt werden kann. Die flotierten Kerne werden als die weitere schalenarme Kornfraktion abgenommen. Sie können über eine Bandpresse entwässert und der schon zuvor abgetrennten schalenarmen Kornfraktion zugeschlagen werden. Dieses Zuschlagen kann bereits vor dem Abpressen des kaltgepressten Rapskernöls erfolgen, aber auch erst später. Vorzugsweise erfolgt das Einbringen der weiteren schalenarmen Kornfraktion in den Materialhauptstrom aber vor dem vor dem Zuführen des gespannten Wasserdampfs und dem sich daran anschließenden Expandieren zu den Collets. Die abgetrennte Schalenfraktion kann aufgrund ihrer größeren Dichte als Wasser separiert, weiter aufgereinigt und dann beispielsweise thermisch oder in einer Biogasanlage verwertet werden.

Nach dem Schälen und vor dem Abpressen kann die schalenarme Kornfraktion zu Flocken gewalzt und dazu durch mindestens einen von Flockierwalzen gebildeten Walzenspalt hindurchgeführt werden. Dabei ist die Temperatur der Flocken unter 45 °C zu halten. Die Flocken weisen vorzugsweise eine Flockendicke von 0,1 bis 0,8 mm auf.

Das Abpressen der schalenarmen Kornfraktion erfolgt ohne Zuführen zusätzlicher Wärme. Durch die beim Abpressen geleistete Arbeit kommt es dennoch zu einer Temperaturerhöhung. Diese wird erfindungsgemäß auf eine maximale Kuchentemperatur in dem entstehenden Presskuchen von 70 °C begrenzt. Damit wird ein Trans-Fettsäuregehalt des kaltgepressten Rapskernöls von 0,2 % sicher eingehalten und oftmals weit unterschritten.

Beim Abpressen kann das kaltgepresste Rapskernöl in einer ersten Ölfraktion, die während des Abpressens auf nicht mehr als eine erste Grenztemperatur erwärmt wird, und in einer zweiten Ölfraktion, die während des Abpressens auf mehr als die erste Grenztemperatur erwärmt wird, aufgefangen werden. Die erste Ölfraktion weist dann den geringsten thermischen Einfluss auf ihre Ölzusammensetzung auf, und es handelt sich um das hochwertigste bei dem erfindungsgemäßen Verfahren gewonnene Rapskernöl. Auch die zweite Ölfraktion ist gemäß Codex Alimentarius hochwertiges kaltgepresstes Rapskernöl. Es kann auch noch eine dritte Ölfraktion aufgefangen werden, die während des Abpressens auf mehr als eine zweite Grenztemperatur erwärmt wird. Die erste Grenztemperatur zwischen der ersten und zweiten Ölfraktion kann zwischen 35 und 50 °C liegen. Vorzugsweise beträgt Sie ca. 40 °C. Bei der maximalen Kuchentemperatur von 70 °C weist die erste Ölfraktion dann eine durchschnittliche Temperatur von 32 bis 36 °C und deutlich weniger als 0,1 % Trans-Fettsäuren auf, während die zweite Ölfraktion eine durchschnittliche Temperatur von 40 bis 50 °C und zumindest deutlich weniger als 0,2 % Trans-Fettsäuren aufweist. Die zweite Grenztemperatur zwischen der zweiten und einer etwaigen dritten Ölfraktion kann bei etwa 60 °C liegen.

Bei dem erfindungsgemäßen Abpressen bei Kuchentemperaturen von nicht mehr als 70 °C kann die schalenarme Kornfraktion auf einen ersten Restölgehalt von 18 bis 28 Gewichtsprozent oder 20 bis 24 Gewichtsprozent, d. h. etwa 22 Gewichtsprozent ihrer Trockenmasse abgepresst werden. Das kaltgepresste Rapskernöl kann in üblicher Weise durch Filtration und/oder Sedimentation aufbereitet werden und liefert kaltgepresste native Rapskernöle in Lebensmittelqualität.

Herkömmliche Schneckenpressen zum Abpressen von Öl sind auf Leistung ausgelegt, d. h. es soll ein möglichst hoher Durchsatz erreicht werden. Durch das Schälen der Körner und das entsprechende Fehlen von Schalen in der Schneckenpresse tritt eine Leistungsabnahme ein, welche den Durchsatz einer schalenarmen Öl-Kaltpressung gegenüber einer normalen Öl-Kaltpressung reduziert und Kosten verursacht, da eine größere Schneckenpresse mit höherer Leistungsaufnahme erforderlich ist. Zudem kommt es durch die höher Leistungsaufnahme auch zu einer stärkeren Erwärmung des Materials in der Schneckenpresse.

Um die Leistung der schalenarmen Öl-Kaltpressung mit einer Schneckenpresse zu erhöhen und damit die Wirtschaftlichkeit zu verbessern, wird bei dem erfindungsgemäßen Verfahren ein Teil des Presskuchens der schalenarmen Kornfraktion vor dem Abpressen zugesetzt, um die Friktion beim Abpressen zu erhöhen. Diese Rückführung ist bei dem erfindungsgemäßen Verfahren nicht mit der Gefahr einer Verkeimung der Schneckenpresse verbunden, da der zurückgeführte Teil des Presskuchens erst nach dem Expandieren abgeteilt wird, und damit nach dem Entkeimen des Presskuchens durch den zugesetzten Wasserdampf. Mit anderen Worten handelt es sich bei dem erfindungsgemäß zurückgeführten Teil des Presskuchens um einen Teil der daraus durch das Expandieren ausgebildeten Collets, die aufgrund der thermischen Behandlung frei von Verkeimungen und hygienisch unbedenklich sind. Durch die Zugabe der Collets zur Friktionserhöhung bei der Kaltpressung werden Leistungsdaten einer herkömmlichen Öl-Kaltpressung erreicht. Zudem sind die mechanischen Eigenschaften der Collets für die Leistungssteigerung beim Abpressen günstiger als die des Presskuchens vor dem Expandieren.

Als Günstig erweist es sich, wenn der zurückgeführte Teil des Presskuchens bzw. der Collets bis auf eine Temperatur von 20 bis 35 °C und vorzugsweise auf eine Temperatur von 25 bis 30 °C, d. h. etwa auf Umgebungstemperatur abgekühlt wird und damit fest und wenig verformbar ist, bevor er der schalenarmen Kornfraktion zugeschlagen wird.

Der zurückgeführte Teil des Presskuchens bzw. der Collets weist eine maximale Teilchengröße von 4 bis 6 mm, vorzugsweise von 5 mm auf. Es kann sich also insbesondere um Feinteile und Bruchstücke der Collets handeln. Je nach Schalenanteil ersetzt der zurückgeführte Teil des Presskuchens bzw. der Collets die zuvor abgetrennten Schalen, weshalb der zurückgeführte Teil bis zu 20 % des Presskuchens bzw. der Collets und damit auch der zu pressenden Masse ausmachen kann. Je nach Pressentyp liegt der sinnvoller Weise zurückgeführte Teil über 5 % und häufig zwischen 10 % und 15 % des Presskuchens bzw. der Collets.

Nicht nur die Collets, die unmittelbar durch das Expandieren aus dem Presskuchen entstehen, eignen sich für die Rückführung und Erhöhung der Friktion beim Abpressen der schalenarmen Kornfraktion. Auch die Collets, die nach einer Extraktion mit einem organischen Lösungsmittel zum Reduzieren ihres Restölgehalts zurückbleiben, sind geeignet und können mit einer Maximalgröße von 5 mm abgesiebt, getrocknet und zum Abpressen zurückgeführt werden.

Überraschenderweise zeigt sich, dass die Collets die Friktion erhöhen und so die Leistung des Abpressens des kalten Öls verbessern, ohne die Qualität des abgepressten Öls zu verringern. Vielmehr steigen der Durchsatz und die Pressleistung bei gleichbleibender Stromaufnahme und damit wird auch die Kuchentemperatur begrenzt, weil weniger mechanische Leistung in Wärme umgesetzt wird.

Der durch das Abpressen erhaltene Presskuchen kann zerkleinert oder direkt verwendet werden, und ihm kann eine durch Flotation gewonnene weitere schalenarme Kornfraktion bzw. was davon nach Abpressen übrig ist, zugeschlagen werden.

Der Presskuchen wird für das Zuführen des Wasserdampfs und das anschließende Expandieren einem Expander/Extruder zugeführt. Unter der Zugabe des gespannten Wasserdampfs wird das Material komprimiert und dabei kurzzeitig auf über 100 °C und typischerweise bis zu 140 °C erwärmt, bevor es expandiert und dabei durch die Entspannung des Wasserdampfs wieder abgekühlt wird. Dabei ist die Dampfmenge so einzustellen, dass die Collet-Temperatur nach dem Expandieren zwischen 80 und 95 °C liegt.

Die entstehenden Expandate sind die sogenannten Collets, die im Gegensatz zu Pellets, in denen der Presskuchen nach dem Abpressen anfallen kann, eine offene Porenstruktur aufweisen, welche ihre weitere Verarbeitung erleichtert. Die durch Dampf und Druck erzeugte kurzzeitige Temperaturerhöhung auf über 100 °C und bis zu 140 °C inhibiert Enzyme und Salmonellen und stabilisiert die hygienisierte Porenstruktur stabil und elastisch, wodurch die Rückführung der Collets zum Ersatz der Schalen in der Kaltpressung möglich wird. Zudem führt die kurzzeitige Temperaturerhöhung zu einer partiellen Denaturierung der in den Collets enthaltenen Proteine. Diese partielle Denaturierung schränkt den Futter- bzw. Nahrungsmittelwert der Proteine nicht wesentlich ein. Typischer Weise weisen die erfindungsgemäß hergestellten Collets eine Abnahme ihrer Proteinlöslichkeit von nicht mehr als 20 % gegenüber dem Presskuchen auf. Die partielle Denaturierung der Proteine führt aber dazu, dass die Proteine bei anschließenden Extraktionen der Collets, um weiteres Öl und unerwünschte Inhaltsstoffe zu entziehen, in den Collets zurückbleiben und nicht verlorengehen. Die Menge an Wasserdampf und die resultierenden Temperaturen sind richtig eingestellt, wenn die Proteindenaturierung der Collets gegenüber dem Presskuchen gering ist und die Proteinlöslichkeit, gemessen über NSI (Nitrogen Solubility Index) oder PDI (Protein Dispersibility Index), nicht unter 80 % der Proteinlöslichkeit im Presskuchen fällt.

Die Collets werden mit einem organischen Lösungsmittel extrahiert, um die Collets auf einen zweiten Restölgehalt von weniger als 2 Gewichtsprozent oder von 0,3 bis 1,3 Gewichtsprozent ihrer Trockenmasse zu reduzieren. Als organisches Lösungsmittel kann neben Hexan auch jedes andere organische Lösungsmittel verwendet werden, in dem sich Öl gut löst, wie beispielsweise Isopropanol. Auch die Verwendung von azeotropem oder reinem Alkohol in Form von Ethanol ist möglich. Dabei kann es sich insbesondere um Bioalkohol handeln, so dass beim Verarbeiten von Biorapssaat ein Biorapsproteinprodukt entsteht.

Für die Extraktionen können ebenso wie für alle bisher beschriebenen Schritte des erfindungsgemäßen Verfahrens industrielle Standardtechnologien eingesetzt werden, insbesondere Karussellextrakteure oder Bandextrakteure. Das eingesetzte Lösungsmittel umschließt in einer Perkolation die Collets, wobei aus dem Lösungsmittel eine Miscella entsteht, in der das in den Collets enthaltene Öl gelöst ist. Diese Miscella wird in bekannter Weise durch Destillationen von dem Lösungsmittel getrennt, so dass das Öl zurückbleibt. Bei diesem handelt es sich um extrahiertes Rapskernöl.

Die extrahierten Collets können getrocknet und zerkleinert werden, wobei ein hochproteinhaltiges Rapsproteinmehl mit einem Proteingehalt von mehr als 45 Gewichtsprozent, vorzugsweise mehr als 48 Gewichtsprozent Protein in der Trockenmasse entsteht, das wie HP Sojabohnenmehl nahezu schalenfrei ist. Dieses Rapskernmehl kann mit bekannten Techniken weiter aufbereitet werden.

Eine mögliche Aufbereitung der nach dem Extrahieren mit dem organischen Lösungsmittel getrockneten Collets ist die Alkohol-Wasser-Extraktion zur Entfernung nicht proteinogener Inhaltsstoffe und Anreicherung der Proteine zu einem Rapsproteinkonzentrat.

Hierzu werden die Collets zunächst gesiebt, um Feinteile und Colletbruch, der durch die mechanische Belastung beim Trocknen zwangsläufig entsteht, abzutrennen. Werden diese Feinteile genutzt, um die Friktion der Kaltpressung zu verbessern, wird ein Sieb gewählt, dass Partikel ab 5 mm zurückhält, wird das Material in einer alkoholischen Extraktion weiterbehandelt reicht eine Ausschlussgrenze von 1 mm.

Die um die Feinteile reduzierten Collets werden dann einer Quellung in der Alkohol-Wasser Mischung unterzogen, wofür 15 Minuten ausreichend sind. Die Quellung sollte zerstörungsfrei sein, bevor die mit der Alkohol-Wasser Mischung gesättigten Collets einer erneuten Bandextraktion zugeführt werden, die analog der Extraktion mit dem organischen Lösungsmittel erfolgen kann. Eine geeignete einfache Umsetzung ist es, der Bandextraktion eine Quellschnecke vorzuschalten, um die Quellung kontinuierlich durchzuführen. Es eignen sich aber auch alle anderen technischen Maßnahmen, die eine kontinuierliche Quellung ermöglichen.

Die Quellung kann mit der alkoholischen Miscella der alkoholischen Bandextraktion betrieben werden, die dem Ablauf zur Destillation entsprochen hätte. Somit führt die Quellschnecke zu einer weiteren Extraktionsstufe.

Alternativ können die mit dem organischen Lösungsmittel extrahierten Collets direkt, also ohne Trocknen und/oder Zerkleinern weiter aufbereitet werden.

So können, um die Struktur der Collets nicht zu zerstören und damit Feinteile zu erzeugen, die Collets durch einfache Drainage und das Abtropfen des organischen Lösungsmittels vor dem Austrag aus dem Lösungsmittel-Extrakteur entfeuchtet werden. Auf diese Weise können typischerweise mehr als 50 % des Lösungsmittels aus den Collets entfernt werden. Am Ausgang des Lösungsmittel-Extrakteurs werden die Collets von einer Fördereinheit zerstörungsfrei aufgenommen und abtransportiert, beispielsweise von einer Förderschnecke oder einem Förderband. Die Fördereinheit fördert die Lösungsmittel-nassen Collets ohne Scherung zu einem Filter, der in Trennbereiche unterteilt ist. Zerstörungsfrei wird das Material auf den Filter übergeben. Bei dem Filter kann es sich um einen geschlossenen Drehfilter oder Bandfilter handeln, insbesondere einen Vakuumbandfilter. Zwischen der Fördereinheit und dem Filter kann eine Zellenradschleuse installiert sein, um eine Abgrenzung der Lösungsmittelbereiche zu erreichen. Nachdem die Lösungsmittel-nassen Collets auf dem Filter angeordnet wurden, wird der Filter in eine erste Position gebracht, in der der Lösungsmittelgehalt der Lösungsmittel-nassen Collets weiter reduziert wird. Dies kann durch Anlegen eines Vakuums an einen Vakuumbandfilter beschleunigt werden. So kann ein Lösungsmittelanteil von unter 40 Gewichtsprozent erreicht werden. Dabei hat sich das Lösungsmittel aufgrund der Kapillarwirkung zu dem Filter hin konzentriert, so dass über dem Lösungsmittel in den Kapillaren in den Collets eine Lösungsmittel-arme Schicht ausgebildet ist, die nur die Oberfläche der Kapillaren der Collets benetzt.. Wenn das organische Lösungsmittel Hexan ist, kann ab einer zweiten Position des Filters reiner Alkohol oder ein Wasser-Alkohol-Azeotrop aufgetragen werden, um das Hexan zu verdrängen. Durch die resultierende Schichtung der Lösungsmittel in den Collets ergibt sich eine nahezu ebene Alkohol/Hexan-Grenzschicht, so dass nur eine geringe Mischfraktion Hexan/Alkohol/Wasser entsteht. Nach zwei bis drei Waschstufen ist das Hexan in der Struktur der Collets rückstandslos gegen Alkohol ausgetauscht. Dabei ergeben sich nur kleine Volumina einer Hexan/Alkohol-Mischfraktion, die separat durch Destillation aufbereitet werden können. Dieses Beispiel ist exemplarisch. Jede andere technische Vorrichtung, die einen Lösungsmittelaustausch ermöglicht, kann verwendet werden.

An den Lösungsmittelaustausch kann sich eine Extraktion der Collets mit einer wässrigen Alkohollösung anschließen, um ein gereinigtes Rapsproteinkonzentrat zu erhalten. Dabei kann die wässrige Alkohollösung 70 bis 96 Volumenprozent Alkohol aufweisen. Bevorzugt sind 80 bis 90 Volumenprozent Alkohol. Diese Alkoholextraktion insbesondere von Ethanol dient der Entfernung von Toxinen und anderen antinutritiven Inhaltsstoffen. Bei der bevorzugten Alkoholkonzentration bleibt die Quellung der in dem Rapsmaterial enthaltenen Fasern und die damit einhergehende Volumenzunahme gering. So wird auch verhindert, dass die Perkolationsraten der Collets in Folge der Quellung stark absinken. Eine zu starke Quellung würde die Kapillaren der Collets verschließen.

Vorzugsweise werden die Collets mit der wässrigen Alkohollösung im Gegenstrom extrahiert. Dabei ist ein Verhältnis Feststoff zu Lösungsmittel von 1 zu 2 bis 1 zu 6 sinnvoll. Vorzugsweise werden mindestens 10 Extraktionsstufen im Gegenstrom durchlaufen. Gegen Ende der Extraktion kann eine Verdrängungswäsche mit azeotropem, d. h. 96-prozentigem Alkohol erfolgen, um die Trocknung des extrahierten Materials zu erleichtern. Die Extrakte von den Extraktionsstufen werden gesammelt. Nach Abdestillieren des Alkohols verbleibt eine Raps-Melasse.

Die azeotrope Wasser-Alkohol-Lösung kann separat aufgefangen und zum Austausch von Hexan gegen Alkohol in der Lösungsmittelaustausch-Zone verwendet werden. Vorteil dabei ist, dass die Rückgewinnung des Alkohol-Wasser-Gemisches der Alkohol-Wasser-Extraktion keine Rektifikation benötigt und so kompakt bleiben kann. Die Rektifikation bleibt mit kleinen Volumina dem Lösungsmittelaustausch vorbehalten, der die Hexan-Alkohol-Wasser Mischung trennt.

Eine Alkoholextraktion kann auch unter Herstellung einer Suspension durch Vermahlen in der wässrigen Alkohollösung durchgeführt werden. Die Suspension wird dann über Zentrifugen im Gegenstrom gereinigt. Dies kann als alleinige wässrige Alkoholextraktion oder als Nachgang zu einer bestehenden Bandextraktion durchgeführt werden. Auch Vakuum-Bandextrakteure eignen sich für die Alkohol-Wäsche der Suspension.

Besonders eignet sich die Suspensionswäsche zur Nachbehandlung nach der vorgesehenen Bandextraktion, da in den Collets viele Verunreinigungen immobilisiert sind, die erst mit Öffnung der Collets frei werden. Damit erfüllt die Suspensionswäsche die Aufgabe einer Feinreinigung, um die Qualität des Proteinkonzentrats und den Proteinanteil zu erhöhen.

Das gereinigte Rapsproteinkonzentrat kann durch Toasten, Flash-Trocknen oder Vakuum-Trocknen getrocknet werden. Das getrocknete Rapsproteinkonzentrat weist einen Proteinanteil von über 60 Gewichtsprozent bezogen auf seine Trockensubstanz auf.

Bei einer erfindungsgemäßen Vorrichtung zur Durchführung des erfindungsgemäßen Verfahrens zur Verarbeitung von Körnern einer Rapssaat mit einen Walzenspalt bildenden Schälwalzen zum Schälen der Körner, mit einer dem Walzenspalt nachgeschalteten Abtrenneinrichtung mit mindestens einem Sieb oder einen Windsichter zum Abtrennen einer schalenarmen Kornfraktion von einer schalenreichen Kornfraktion, mit Flockierwalzen zum Walzen der schalenarmen Kornfraktion zu Flocken, mit einer Schneckenpresse zum Abpressen von kaltgepresstem Rapskernöl von den Flocken, wobei die Schneckenpresse einen Presskuchen ausgibt, und mit einer Rückführeinrichtung, die dazu ausgebildet ist, einen Teil des Presskuchens zu der Schneckenpresse zurück zu führen, ist der Schneckenpresse ein Expander zum Zuführen von gespanntem Wasserdampf zu dem Presskuchen und zum anschließenden Expandieren des Presskuchens zu Collets sowie dem Expander ein Extrakteur nachgeschaltet, der dazu ausgebildet ist, die Collets mit einem organischen Lösungsmittel zu extrahieren, und ist die Rückführeinrichtung dazu ausgebildet, den Teil des Presskuchens nach dem Expander, d. h. in Form eines Teils der Collets, zurück zu führen.

Die Rückführeinrichtung kann konkret dazu ausgebildet sein, den zurückgeführten Teil des Presskuchens durch Absieben einer Teilchenfraktion mit einer maximalen Teilchengröße im Bereich von 4 bis 6 mm von den Collets abzutrennen. Dieses Absieben kann vor und/oder nach der Extraktion mit dem organischen Lösungsmittel in dem Extrakteur erfolgen.

Die Rückführeinrichtung kann eine Kühlung aufweisen, die dazu ausgebildet ist, den Teil des Presskuchens abzukühlen. Die Kühlung kann zum Beispiel ein Kühlluftgebläse umfassen, das zu einer Abkühlung des Teils des Presskuchens durch Verdunstungskälte in Folge der Verdunstung enthaltener Feuchtigkeit führt.

Die Schneckenpresse kann eine um eine horizontale Drehachse umlaufende Pressschnecke und einen Siebmantel aufweisen, wobei in einem unterhalb des Siebmantels angeordneten Ölauffangbecken ein quer zu der Drehachse verlaufendes Wehr, das eine zunächst abgepresste erste Ölfraktion und eine später abgepresste zweite Ölfraktion des kaltgepressten Rapskernöls in dem Ölauffangbecken voneinander trennt, in Richtung der Drehachse verschiebbar ist. Durch das Verschieben des Wehrs kann die oben erläuterte erste Grenztemperatur zwischen der ersten und der zweiten Ölfraktion eingestellt werden. Wenn ein Antrieb vorgesehen ist, der das Wehr abhängig von einem Signal mindestens eines an dem Wehr angeordneten Öltemperatursensors in Richtung der Drehachse verschiebt, kann die erste Grenztemperatur auf einen vorgegebenen Wert geregelt werden, auch wenn die Temperaturverteilung über die Schneckenpresse variiert. Der Siebmantel der Schneckenpresse kann aus Seiherstäben ausgebildet sein.

Weiterhin kann die erfindungsgemäße Vorrichtung ein Flotationsbecken aufweisen, um die schalenreiche Kornfraktion durch Flotation in Wasser in eine weitere schalenarme Kornfraktion und eine Schalenfraktion aufzutrennen. Dabei kann das Flotationsbecken optional einen an oder nahe seinem Grund einmündenden Druckluftanschluss und/oder ein Rührwerk aufweisen.

Der dem Expander nachgeschaltete Extrakteur kann weiterhin dazu ausgebildet sein, die Collets zu trocknen oder die noch Lösungsmittel-nassen Collets einem Lösungsmittelaustausch zu unterziehen und die Collets dann mit einer wässrigen Alkohollösung zu extrahieren.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Schneckenpresse die Rede ist, ist dies so zu verstehen, dass genau eine Schneckenpresse, zwei Schneckenpressen oder mehr Schneckenpressen vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist ein Blockdiagramm einer erfindungsgemäßen Vorrichtung und zum Ablauf des erfindungsgemäßen Verfahrens und
- **Fig. 2**: zeigt eine bevorzugte Ausführungsform einer Schneckenpresse der erfindungsgemäßen Vorrichtung.

### FIGURENBESCHREIBUNG

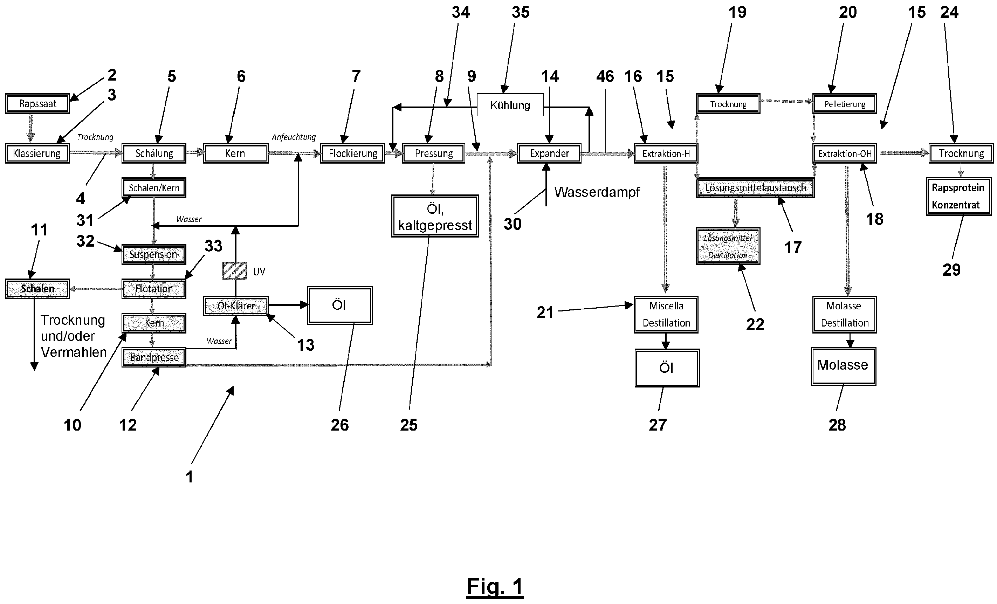

**Fig. 1** zeigt in einem Blockdiagramm eine erfindungsgemäße Vorrichtung 1 und zugleich den Ablauf eines erfindungsgemäßen Verfahrens. Rapssaat aus einem Bunker 2 wird einer Klassierung und Reinigung in einer Siebanlage 3 unterworfen. Von der Siebanlage 3 werden gereinigte Körner 4 innerhalb eines vorgegebenen Korngrößenbereichs erhalten. Nach eventueller Trocknung, um eine Feuchtigkeit der Körner 4 von etwa 5 Gewichtsprozent einzustellen, erfolgt eine Schälung der Körner 4 mit Schälwalzen 5, die einen Walzenspalt bilden und denen eine Abtrenneinrichtung nachgeschaltet ist. Ergebnis sind eine schalenarme Kornfraktion 6 und eine schalenreiche Kornfraktion 31. Die schalenarme Kornfraktion 6 wird mit Flockierwalzen 7 zu Flocken gewalzt. Von den Flocken wird in einer Schneckenpresse 8 kaltgepresstes Rapskernöl 25 abgepresst. Ein resultierender Presskuchen 9 wird einem Expander 14 zugeführt.

Die schalenreiche Kornfraktion 31 wird hingegen mit Wasser zu einer Suspension 32 versetzt, in der die in einem Kernanteil der schalenreichen Kornfraktion 31 enthaltenen Fasern quellen. Danach tritt eine Flotation 33 auf, bei der eine weitere schalenarme Kornfraktion 10 aufschwimmt und sich so von einer Schalenfraktion 11 trennt. Die Schalenfraktion 11 kann getrocknet und/oder vermahlen werden und beispielsweise in einer Verbrennungs- oder Biogasanlage verwertet werden. Die weitere schalenarme Kornfraktion 10 wird in einer Bandpresse 12 abgepresst. Ihr Feststoffanteil wird dem Presskuchen 9 vor dem Expander 14 zugeschlagen. Von der Bandpresse 12 abgepresstes Wasser wird in einem Ölklärer 13 aufbereitet, in dem Öl 26 abgetrennt wird. Das gereinigte Wasser wird zur Entkeimung UV-behandelt und wieder verwendet. Der Presskuchen 9 und die weitere schalenarme Kornfraktion 10 werden zerkleinert und so dem Expander 14 zugeführt. In dem Expander 14 wird die Temperatur des Presskuchens 9 durch Zuführung von gespanntem Wasserdampf kurzzeitig auf über 100 °C, typischerweise auf bis zu 140 °C erhöht. Beim Austreten aus dem Expander entspannt sich der Wasserdampf und kühlt das in Form von Collets 46 austretende Material auf 80 bis 95 °C ab. Die Collets 46 werden in einem Extrakteur 15 zunächst einer Lösungsmittelextraktion 16 mit beispielsweise Hexan unterzogen. Nach Lösungsmittelaustausch 17 erfolgt eine wässrige Alkoholextraktion 18. Statt des Lösungsmittelaustauschs kann eine Trocknung 19 der Lösungsmittel-extrahierten Collets erfolgen. Hieran kann sich eine Pelletierung 20 oder eine weitere Expansion des getrockneten Materials anschließen, oder ein von der Trocknung 19 resultierendes Rapsproteinmehl wird als Produkt ausgegeben.

Die Alkoholextraktion 18 kann auch an von der Trocknung 19 resultierenden Collets oder dem Rapsproteinmehl durchgeführt werden. In einer Destillation 21 wird aus der Miscella der Lösungsmittelextraktion 16 extrahiertes Rapskernöl 27 gewonnen. In einer Destillation 22 wird Lösungsmittel von dem Lösungsmittelaustausch 17 zurückgewonnen. Aus einer Destillation 23 des alkoholischen Extrakts von der Alkoholextraktion 18 resultiert eine Melasse 28. Eine Trocknung 24 des Rückstands der alkoholischen Extraktion 18 ergibt ein gereinigtes Rapsproteinkonzentrat 29.

Eine Rückführeinrichtung 34 führt einen Teil des Presskuchens 9 nach dem Expandieren am Ausgang des Expanders 14 in die Schneckenpresse 8 zurück. Konkret werden von den aus dem Expander 14 austretenden Collets 46 Feinteile abgesiebt, mit einer Kühlung 35 der Rückführeinrichtung 34 auf eine Temperatur < 35 °C abgekühlt und dann der gewalzten schalenarmen Kornfraktion 6 zugeschlagen, um die Friktion in der Schneckenpresse 8 zu erhöhen. Eine gewisse Friktion der abgepressten schalenarmen Kornfraktion 6 und der Schneckenpresse 8 ist erforderlich, um eine ausreichende Pressleistung in Bezug auf die eingesetztes mechanische Energie, und damit auch in Bezug auf die Erwärmung des in der Schneckenpresse 8 entstehenden Presskuchens 9, sowie den Restölgehalt des Presskuchens 9 zu erreichen. Diese Friktion wird durch die abgekühlten Collets bereitgestellt, ohne dass durch die Rückführung eines Teils des Presskuchens 9 in die Schneckenpresse 8 hygienische Probleme auftreten, weil die Collets 46 durch das Expandieren in dem Expander 14 hygienisiert sind. Zudem weisen die Collets 46 bessere mechanische Eigenschaften zur Erhöhung der Friktion in der Schneckenpresse 8 auf als der Presskuchen 9 vor dem Expander 14.

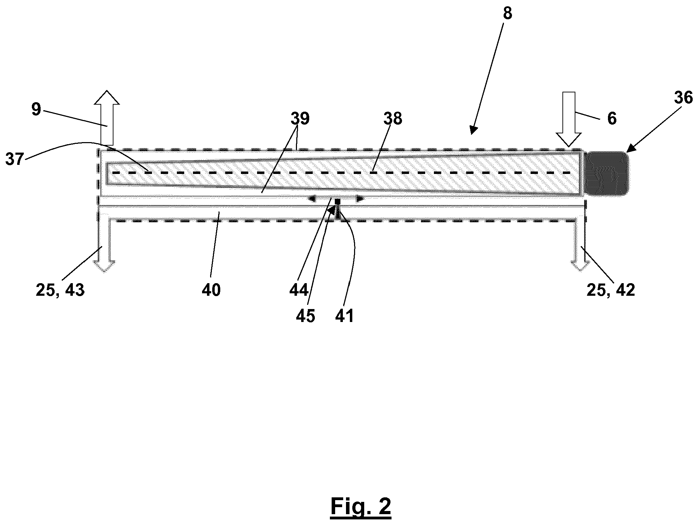

Die in **Fig. 2** dargestellte Ausführungsform der Schneckenpresse 8 der erfindungsgemäßen Vorrichtung 1 weist einen elektrischen Antrieb 36 auf, der eine Pressschnecke 37 um eine horizontale Drehachse 38 gegenüber einem Siebmantel 39 verdreht, um das Rapskernöl 25 von der schalenarmen Fraktion 6 abzupressen, wobei der Presskuchen 9 entsteht. Dabei wird in Richtung der Drehachse 38 zunächst eine erste Ölfraktion 42 abgepresst, in der das Rapskernöl 25 eine Grenztemperatur nicht überschreitet. Danach wird eine zweite Ölfraktion 43 abgepresst, die immer noch aus kaltgepresstem Rapskernöl 25 besteht, weil der Schneckenpresse 8 keine Wärme zugeführt wird. Durch das Einwirken der Pressschnecke 37 auf die schalenarme Kornfraktion 6 kommt es aber zu einem Temperaturanstieg in der Schneckenpresse 8 längs der Drehachse 38. Diese wird auf eine maximale Kuchentemperatur des Presskuchens 9 von 70 °C begrenzt. Damit weist auch die zweite Ölfraktion 43 einen Trans-Fettsäuregehalt von weniger als 0,2 % auf. Der Trans-Fettsäuregehalt der ersten Ölfraktion 42 liegt unter 0,1 %. Getrennt werden die beiden Ölfraktionen 42 und 43 in einer unter dem Siebmantel 39 angeordneten Ölauffangwanne 40 durch ein quer zu der Drehachse 38 verlaufendes Wehr 41. Das Wehr 41 wird von einem hier durch einen Doppelpfeil angedeuteten Antrieb 44 längs der Drehachse 38 in Abhängigkeit von einem an dem Wehr 41 angeordneten Öltemperatursensor 45 so verschoben, dass der Öltemperatursensor 45 keine höhere Temperatur als die Grenztemperatur der ersten Ölfraktion 42 erfasst.

### BEISPIEL

10 Tonnen Raps, beispielsweise Doppelnull-Raps, werden gereinigt. Je nach Verunreinigungsgrad werden 2 bis 3 % der Ausgangsmasse entfernt. Bei einer nachfolgenden Klassierung werden bis zu 4 % Körner mit einer Korngröße unter 1,6 mm und über 2,8 mm entfernt. 94 % der ursprünglichen Rapssaat mit einem Feuchtigkeitsgehalt zwischen 7 und 9 % werden der Trocknung zugeführt.

Bei 60 bis 70 °C wird die Rapssaat auf eine Feuchtigkeit von 5 Gewichtsprozent getrocknet und nach Abkühlung auf 30 °C den Schälwalzen 5 zugeführt. Die Auftrennung in die schalenreiche Kornfraktion 31 und die schalenarme Kornfraktion 6 ergibt eine Ausbeute von etwa 80 Gewichtsprozent schalenarme Kornfraktion und 20 Gewichtsprozent schalenreiche Kornfraktion 31. Die schalenreiche Kornfraktion 31 weist dabei 30 bis 40 Gewichtsprozent Kernmaterial auf, während die schalenarme Kornfraktion 6 unter 4 % Schalen umfasst. Die schalenreiche Kornfraktion 31 enthält insgesamt ca. 20 Gewichtsprozent Öl und 16 Gewichtsprozent Protein. Die schalenreiche Kornfraktion 31 wird mit Wasser von 20 bis 30 °C versetzt. In Massenanteilen ergibt sich dabei ein Verhältnis von 1 zu 6, d. h. auf 1 kg der schalenreichen Kornfraktion 31 entfallen mindestens 6 kg Wasser. Nach Zugabe des Wassers wird die resultierende Suspension 32 durch leichtes, scherfreies Rühren in Bewegung gesetzt und durchmischt. Für 15 Minuten quellen die Fasern der Kerne in der schalenreichen Kornfraktion 31. In der anschließenden Flotation 33 der gerührten schalenreichen Kornfraktion kommt es zu einer Auftrennung in die aufschwimmende weitere schalenarme Kornfraktion 10 und die Schalenfraktion 11. Zur Verstärkung der Flotation kann fein verteilte Luft eingeblasen werden. Die gequollenen Kerne der weiteren schalenarmen Kornfraktion 10 werden mit der Bandpresse 12 aufgefangen. Das Wasser wird abgetrennt und im Kreislauf einer neuen schalenreichen Kornfraktion 31 zugeführt. Die mit der Bandpresse 12 aufgefangene weitere schalenarme Kornfraktion 10 wird entwässert und dem Presskuchen 9 vor dem Expander 14 zugesetzt.

Die schalenarme Kornfraktion 6 wird anschließend mit den Flockierwalzen 7 zu Flocken gewalzt. Die schalenarme Kornfraktion 6 wird nur so stark gewalzt, dass eine Temperatur der Flocken unter 45 °C gehalten wird. Um diese Temperatur einzuhalten können die Flockierwalzen 7 gekühlt werden. Die Flocken werden direkt der Schneckenpresse 8 zugeführt. In der Schneckenpresse 8 werden die Flocken durch die Pressschnecke 37 der Schneckenpresse 8 komprimiert. Das austretende kaltgepresste Rapskernöl 25 wird nach Temperaturbereichen getrennt aufgefangen. Die erste Ölfraktion 42 mit einer Temperatur von 35 bis 40 °C ist natives, kaltgepresstes virgin Rapskernöl und weist einen Gehalt von Trans-Fettsäuren unter 0,1% auf. Die zweite Ölfraktion 43 zwischen 45 und 60 °C ist natives, kaltgepresstes Rapskernöl 25 und weist einen Gehalt von Trans-Fettsäuren unter 0,2 % auf. Beide Ölfraktionen ergeben zusammen ca. 2,8 Tonnen kaltgepresstes Rapskernöl 25, wobei 40 % virgin Rapskernöl und 60 % natives kaltgepresstes Rapskernöl sind. Der aus der Schneckenpresse 8 austretende Presskuchen 9 weist einen Restölgehalt von 22 bis 23 Gewichtsprozent auf.

Der Presskuchen 9 wird zerkleinert, ihm wird die weitere schalenarme Kornfraktion 10 von der Bandpresse 12 zugesetzt, und er wird dem Expander 14 zugeführt. In dem Expander 14 wird unter Zugabe von gespanntem Wasserdampf 30 der Presskuchen so erwärmt, dass nach dem Austritt aus dem Expander 14 eine Temperatur zwischen 80 und 95 °C der als Expandat entstehenden Collets 46 erreicht wird. Die Collets 46 werden abgekühlt. Feinteile und Bruchstücke mit einer Teilchengröße bis 5 mm werden von den Collets 46 abgesiebt. Der Anteil der Feinteile beträgt 3 bis 6 Gewichtsprozent. 5 bis 20 Gewichtsprozent der Collets werden der schalenarmen Kornfraktion 6 vor der Schneckenpresse 8 in Form der Feinteile und von Bruchstücken zugeführt und erhöhen die Friktion beim Kaltabpressen des Rapskernöls 25.

Collets 46 größer als 5 mm werden in einem Karussellextrakteur des Extrakteurs 15 mit Hexan bei 60 °C mehrstufig im Gegenstrom unter Perkolation extrahiert. Die entstehende Miscella wird destilliert und das Hexan wird dem Prozess erneut zugeführt. Die Extraktionszeit liegt zwischen 1 und 3 Stunden, vorzugsweise bei ca. 2 Stunden. Es entsteht extrahiertes Rapskernöl 27 mit einer Masse von 1,1 Tonnen.

Nach der Extraktion 16 werden die Hexan-nassen Collets 46 werden abgetropft und entfeuchtet. Die Collets 46 können dann entweder einer Trocknung 19 zu einem hochproteinhaltigen Rapsproteinmehl oder einem Lösungsmittelaustausch 17 zugeführt werden.

Wird die Trocknung 19 der Hexan-nassen Collets 46 gewählt, können die getrockneten Collets 46 entweder zu einem Proteinmehl vermahlen oder zunächst zur Verringerung der Feinteile mit einem Sieb von 1 mm gesiebt werden. Die von den Feinteilen befreiten Collets 46 werden dann einer Quellschnecke zugeführt. Die Schnecke transportiert die Collets und übergibt die Collets 46 an den Bandextrakteur 18 zur Extraktion mittels wässriger Alkohollösung von 80 % Alkohol.

Der Lösungsmittelaustausch 17 erfolgt insbesondere mit Hilfe eines Vakuumbandfilters. Nach Weitertransport wird das enthaltene Hexan mit 96-prozentigem Ethanol überschichtet. Im weiteren Verlauf wird das Ethanol durch die Collets gesaugt, wobei im Gegenstrom das Ethanol zugeführt wird. Nach 3 Takten ist das Hexan durch Ethanol ausgetauscht, und die Collets werden nun mit 80-prozentigem Ethanol überschichtet und sie quellen für eine Quellzeit von 15 Minuten im Gegenstrom. Für das Quellen kann die aus der nachfolgenden Alkoholextraktion 18 austretende alkoholische Lösung (Melasse 28) genutzt werden. Das gequollene Material wird ausgetragen, dabei aufgelockert und einem Bandextrakteur der nachfolgenden Alkoholextraktion 18 zugeführt, in der die Collets mit 80-prozentigem Ethanol weiter extrahiert werden, wobei die Extraktionszeit 1 bis 3 Stunden beträgt. Die letzte Alkoholstufe kann eine Verdrängung des Alkohol-Wassergemisches gegen 96-prozentiges Ethanol sein, um die Energiekosten der anschließenden Trocknung 24 zu reduzieren. Derartiger azeotroper Alkohol kann auch zur Verdrängung des Hexans im Lösungsmittelaustausch 17 verwendet werden. Damit ergibt sich der Vorteil, dass in der Destillation 22 nur wenig Lösungsmittel zu rektifizieren ist.

Der Alkohol von der Alkoholextraktion 18 wird abdestilliert und wiederverwendet. Zurück bleibt die Melasse 28. Die Trockenmasse der Melasse 28 entspricht etwa 10 bis 12 % der verarbeitenden Rapssaat. Das durch die Alkoholextraktion gereinigte Rapsproteinkonzentrat 29 wird getrocknet und ergibt 3 Tonnen.

Das Rapsproteinkonzentrat 29 weist folgende Zusammensetzung auf:

| | |
|---|---|
| Proteingehalt auf Trockensubstanz (N*6,25) | 64,0 % +/- 2 %, |
| Trockensubstanz | 90 % +/- 2 % |
| Ölgehalt | 0,4% +/- 0,2% |
| Glycosinolatgehalt | kleinergleich 1 µmol/g |
| Polyphenole | kleinergleich 0,1 % |
| Sinapine | kleinergleich 0,1 % |
| Phytinsäure | 3 % +/- 2 % |
| Helle Farbe | |
| Neutraler Geschmack | |
| Ausbeute an Konzentrat | |
| bezogen auf klassierten Raps | 30 % |

Die exemplarische Aminosäurezusammensetzung zeigt eine der Rapssaat nahekommende Zusammensetzung:

| TYPICAL AMINO ACIDS | | | | |
|---|---|---|---|---|
| | | on Sample g/100g DM | on Protein g/100g Protein | |
| Aspartic Acid | Asp | 4,94 | 8,13 | *NE* |
| Glutamic Acid | Glu | 11,16 | 18,36 | *NE* |
| Hydroxyprolin | Hyp | 0,17 | 0,28 | *NE* |
| Serine | Ser | 2,79 | 4,59 | *NE* |
| Glycine | Gly | 3,55 | 5,84 | *NE* |
| Histidine | His | 1,86 | 3,06 | *E* |
| Arginine | Arg | 4,45 | 7,33 | *(NE)* |
| Threonine | Thr | 2,99 | 4,92 | *E* |
| Alanine | Ala | 2,80 | 4,60 | *NE* |
| Proline | Pro | 3,68 | 6,06 | *NE* |
| Tyrosine | Tyr | 1,60 | 2,63 | *(NE)* |
| Valine | Val | 3,58 | 5,89 | *E BCAA* |
| Methionine | Met | 1,18 | 1,94 | *E BCAA* |
| Isoleucine | Ile | 2,73 | 4,49 | *E* |
| Leucine | Leu | 4,73 | 7,78 | *E BCAA* |
| Phenylalanine | Phe | 2,72 | 4,47 | *E* |
| Lysine | Lys | 4,05 | 6,66 | *E* |
| Cysteine/Cyst | Cys | 1,68 | 2,76 | *(NE)* |
| Tryptophan | Trp | 1,03 | 1,69 | *E* |
| | | | | |

| | | | | |
|---|---|---|---|---|
| *NE= not essential* *E*= *essential* *BCAA=branchen-chain amino acids* | | | | |

| *Essential AA* | | | *on AA* |
|---|---|---|---|
| *standard* | *24,87* | *40,90* | *40%* |
| *for Infants*/*children* | *35,26* | *58,00* | *57%* |
| *BCAA* | *9,49* | *15,61* | *15,4%* |

Die exemplarische Ölanalyse zeigt eine der Rapssaat nahekommende Zusammensetzung:

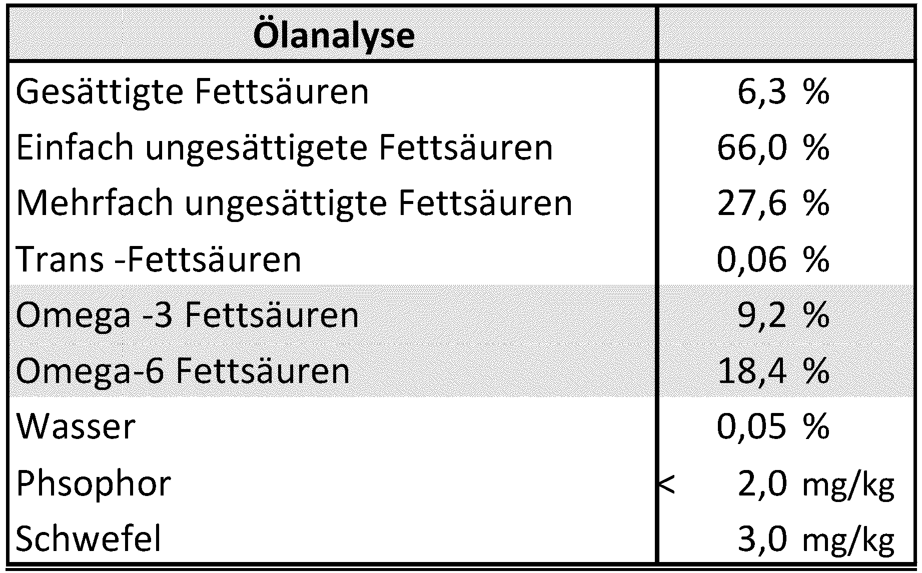

### BEZUGSZEICHENLISTE

- 1: Vorrichtung
- 2: Bunker
- 3: Siebanlage
- 4: Körner
- 5: Schälwalzen
- 6: Schalenarme Kornfraktion
- 7: Flockierwalzen
- 8: Schneckenpresse
- 9: Presskuchen
- 10: Weitere schalenarme Kornfraktion
- 11: Schalenfraktion
- 12: Bandpresse
- 13: Ölklärer
- 14: Expander
- 15: Extrakteur
- 16: Lösungsmittelextraktion
- 17: Lösungsmittelaustausch
- 18: Alkoholextraktion
- 19: Trocknung
- 20: Pelletierung
- 21: Destillation
- 22: Destillation
- 23: Destillation
- 24: Trocknung
- 25: Kaltgepresstes Rapskernöl
- 26: Öl
- 27: Extrahiertes Rapskernöl
- 28: Melasse
- 29: Gereinigtes Rapsproteinkonzentrat
- 30: Wasserdampf
- 31: Schalenreiche Kornfraktion
- 32: Suspension
- 33: Flotation
- 34: Rückführeinrichtung
- 35: Kühlung
- 36: Antrieb
- 37: Pressschnecke
- 38: Drehachse
- 39: Siebmantel
- 40: Ölauffangbecken
- 41: Wehr
- 42: erste Ölfraktion
- 43: zweite Ölfraktion
- 44: Antrieb
- 45: Öltemperatursensor
- 46: Collets

## Patentansprüche

1. Verfahren zur Verarbeitung von Körnern (4) einer Rapssaat mit den Schritten:
- Schälen der Körner (4), wobei die Körner (4) durch einen Walzenspalt zwischen Schälwalzen (5) hindurchgeführt werden, und Abtrennen von Schalen von einer schalenarmen Kornfraktion (6) durch Sieben und/oder Windsichten, so dass die in der schalenarmen Kornfraktion (6) verbleibenden Schalen nicht mehr als 4 Gewichtsprozent der schalenarmen Kornfraktion (6) ausmachen, und
- Abpressen von kaltgepresstem Rapskernöl (25) von der schalenarmen Kornfraktion (6),
- wobei ein Wassergehalt der schalenarmen Kornfraktion von 4 bis 7 Gewichtsprozent beträgt,
- wobei eine Kuchentemperatur in einem entstehenden Presskuchen (9) auf 70 °C begrenzt wird,
- wobei ein erster Restölgehalt auf 18 bis 28 Gewichtsprozent einer Trockenmasse des Presskuchens reduziert wird und
- wobei ein Teil des Presskuchens (9) zurückgeführt, mit der schalenarmen Kornfraktion (6) vor dem Abpressen vermengt und erneut abgepresst wird,
**dadurch gekennzeichnet,**
- **dass** gespannter Wasserdampf (30) zu dem Presskuchen (9) zugeführt und der Presskuchens (9) anschließend zu Collets (46) expandiert wird, wobei der Wasserdampf so dosiert wird, dass der Presskuchen (9) unter Einwirkung des Wasserdampfs (30) vorübergehend auf über 100 °C erwärmt wird und die Collets (46) nach dem Expandieren eine Temperatur von 80 °C bis 95 °C aufweisen,
- **dass** die Collets (46) mit einem organischen Lösungsmittel extrahiert werden, wobei ein zweiter Restölgehalt auf 2 Gewichtsprozent oder weniger einer Trockenmasse der Collets (46) reduziert wird, und
- **dass** der Teil des Presskuchens (9) nach dem Expandieren zurückgeführt wird.

2. Verfahren nach Anspruch 1, **dadurch gekennzeichnet, dass** der Teil des Presskuchens (9), der nach dem Expandieren zurückgeführt wird, vor und/oder nach dem Extrahieren von den Collets (46) abgetrennt wird, wobei der Teil des Presskuchens (9), der nach dem Expandieren zurückgeführt wird, optional durch Absieben kleinerer Teilchen von den Collets (46).

3. Verfahren nach einem der vorhergehenden Ansprüche, **dadurch gekennzeichnet, dass** der Teil des Presskuchens (9), der nach dem Expandieren zurück geführt wird, vor dem erneuten Abpressen auf eine Temperatur im Bereich von 20 bis 35 °C oder von 25 bis 30 °C abgekühlt wird.

4. Verfahren nach einem der vorhergehenden Ansprüche, **dadurch gekennzeichnet, dass** der Teil des Presskuchens (9), der nach dem Expandieren zurück geführt wird, 5 bis 20 Gewichtsprozent des Presskuchens (9) ausmacht.

5. Verfahren nach einem der vorhergehenden Ansprüche, **dadurch gekennzeichnet, dass** das kaltgepresste Rapskernöl (25) in einer ersten Ölfraktion, die während des Abpressens auf nicht mehr als eine Grenztemperatur erwärmt wird, und in einer zweiten Ölfraktion, die während des Abpressens auf mehr als die Grenztemperatur erwärmt wird, aufgefangen wird, wobei die Grenztemperatur zwischen 40 und 50 °C liegt.

6. Verfahren nach Anspruch 5, **dadurch gekennzeichnet, dass** die schalenarme Fraktion mit einer Schneckenpresse (8) mit um eine horizontale Drehachse (38) umlaufenden Pressschnecke (37) und einem Siebmantel (39) um die Pressschnecke (27) abgepresst wird, wobei in einem unterhalb des Siebmantels (39) angeordneten Ölauffangbecken (40) ein quer zu der Drehachse (38) verlaufendes Wehr (41) fortlaufend so in Richtung der Drehachse (38) verschoben wird, dass es die erste Ölfraktion (42) und die zweite Ölfraktion (43) des kaltgepressten Rapskernöls (25) in dem Ölauffangbecken (40) voneinander trennt, wobei das Wehr optional abhängig von einem Signal mindestens eines an dem Wehr angeordneten Öltemperatursensors (45) in Richtung der Drehachse (38) verschoben wird.

7. Verfahren nach einem der vorhergehenden Ansprüche, **dadurch gekennzeichnet, dass** der Presskuchen (9) vor dem Zuführen des gespannten Wasserdampfs (30) zerkleinert wird.

8. Verfahren nach einem der vorhergehenden Ansprüche, **dadurch gekennzeichnet, dass** das organische Lösungsmittel, mit dem die Collets (46) extrahiert werden, um den zweiten Restölgehalt auf 2 Gewichtsprozent oder weniger der Trockenmasse der Collets (46) zu reduzieren, Hexan oder mindestens 95-prozentiger Alkohol ist.

9. Verfahren nach einem der vorhergehenden Ansprüche, **dadurch gekennzeichnet, dass** die Lösungsmittel-nassen Collets (46) unter Erhalten ihrer porösen Struktur getrocknet oder über einen Lösungsmittelaustausch unterworfen werden, wobei mindestens ein austauschendes Lösungsmittel verwendet wird, das aus reinem Alkohol und einem Wasser-Alkohol-Azeotrop ausgewählt ist.

10. Verfahren nach einem der vorhergehenden Ansprüche, **dadurch gekennzeichnet, dass** die mit dem organischen Lösungsmittel extrahierten Collets (46) mit einer wässrigen Alkohollösung extrahiert werden, um ein gereinigtes Rapsproteinkonzentrat (29) zu erhalten, wobei die wässrige Alkohollösung 70 bis 96 Volumenprozent oder 80 bis 90 Volumenprozent Alkohol aufweist, wobei die Collets (46) optional mit der wässrigen Alkohollösung zu einer Suspension vermahlen und im Gegenstrom extrahiert werden.

11. Verfahren nach Anspruch 10, **dadurch gekennzeichnet, dass** die wässrige Alkohollösung mit mindestens 95-prozentigem Ethanol verdrängt wird.

12. Vorrichtung (1) zur Durchführung des Verfahrens zur Verarbeitung von Körnern (4) einer Rapssaat nach einem der vorhergehenden Ansprüche mit
- einen Walzenspalt bildenden Schälwalzen (5) zum Schälen der Körner (4);
- einer dem Walzenspalt nachgeschalteten Abtrenneinrichtung mit mindestens einem Sieb oder einem Windsichter zum Abtrennen einer schalenarmen Kornfraktion (6) von einer schalenreichen Kornfraktion (31);
- Flockierwalzen (7) zum Walzen der schalenarmen Kornfraktion (6) zu Flocken,
- einer Schneckenpresse (8) zum Abpressen von kaltgepresstem Rapskernöl (25) von den Flocken, wobei die Schneckenpresse (8) einen Presskuchen (9) ausgibt; und
- einer Rückführeinrichtung (34), die dazu ausgebildet ist, einen Teil des Presskuchens zu der Schneckenpresse (8) zurück zu führen,
**dadurch gekennzeichnet,**
- **dass** der Schneckenpresse (8) ein Expander (14) zum Zuführen von gespanntem Wasserdampf (30) zu dem Presskuchen (9) und zum anschließenden Expandieren des Presskuchens (9) zu Collets (46) nachgeschaltet ist und
- **dass** dem Expander ein Extrakteur (15) nachgeschaltet ist, der dazu ausgebildet ist, die Collets (46) mit einem organischen Lösungsmittel zu extrahieren, und
- **dass** die Rückführeinrichtung (34) dazu ausgebildet ist, den Teil des Presskuchens (9) nach dem Expander (14) zurück zu führen.

13. Vorrichtung (1) nach Anspruch 12, **dadurch gekennzeichnet, dass** die Rückführeinrichtung (34) dazu ausgebildet ist, den Teil des Presskuchens (9) vor dem und/oder nach der Extraktion mit dem organischen Lösungsmittel in dem Extrakteur (15) durch Absieben einer Teilchenfraktion mit einer maximalen Teilchengröße im Bereich von 4 bis 6 mm von den Collets (46) abzutrennen.

14. Vorrichtung (1) nach Anspruch 12 oder 13, **dadurch gekennzeichnet, dass** die Rückführeinrichtung (34) eine Kühlung (35) aufweist, die dazu ausgebildet ist, den Teil des Presskuchens (9) abzukühlen.

15. Vorrichtung (1) nach einem der Ansprüche 12 bis 14, **dadurch gekennzeichnet, dass** die Schneckenpresse (8) eine um eine horizontale Drehachse (38) umlaufende Pressschnecke (37) und einen Siebmantel (39) aufweist, wobei in einem unterhalb des Siebmantels (39) angeordneten Ölauffangbecken (40) ein quer zu der Drehachse (38) verlaufendes Wehr (41), das eine zunächst abgepresste erste Ölfraktion (42) und eine später abgepresste zweite Ölfraktion (43) des kaltgepressten Rapskernöls (25) in dem Ölauffangbecken (40) voneinander trennt, in Richtung der Drehachse (38) verschiebbar ist, wobei optional ein Antrieb (44) vorgesehen ist, der das Wehr (41) abhängig von einem Signal mindestens eines an dem Wehr (41) angeordneten Öltemperatursensors (45) in Richtung der Drehachse (38) verschiebt.

## Claims

1. Method of processing grains (4) of a rapeseed comprising the steps of:
- dehulling the grains (4), wherein the grains (4) are passed through a roller nip between dehulling rollers (5), and separating hulls from a low-hull grain fraction (6) by sieving and/or air separation such that the hulls remaining in the low-hull grain fraction (6) do not account for more than 4 % by weight of the low-hull grain fraction (6), and
- pressing cold-pressed rape core oil (25) from the low-hull grain fraction (6),
- wherein a water content of the low-hull grain fraction is from 4 to 7 % by weight,
- wherein a cake temperature in a press cake (9) being generated is limited to 70 °C,
- wherein a first residual oil content is reduced to 18 to 28 % by weight of a dry matter of the press cake, and
- wherein a part of the press cake (9) is mixed with the low-hull grain fraction (6) prior to the pressing and is pressed again,
**characterized in**
- **that** pressurized steam (30) is supplied to the press cake (9) and that the press cake (9) is subsequently expanded to form collets (46), wherein the steam is metered such that the press case (9), under the influence of the steam (30), is temporarily heated up above 100 °C and the collets (46), after the expansion, have a temperature from 80 °C and 95 °C,
- **that** the collets (46) are extracted with an organic solvent, wherein a second residual oil content is reduced to 2 % by weight or less of a dry matter of the collets (46), and
- **that** the part of the press cake (9) is returned after the expansion.

2. Method of claim 1, **characterized in that** the part of the press cake (9) that is returned after the expansion is separated from the collets prior to and/or after the extraction wherein, optionally, the part of the press cake (9) that is returned after the expansion is separated by sieving-off smaller parts of the collets (46).

3. Method of any of the preceding claims, **characterized in that** the part of the press cake (9) that is returned after the expansion is cooled down to a temperature in a range from 20 to 35 °C or from 25 to 30 °C prior to being pressed again.

4. Method of any of the preceding claims, **characterized in that** the part of the press cake (9) that is returned after the expansion accounts for up 5 to 20 % by weight of the press cake (9).

5. Method of any of the preceding claims, **characterized in that** the cold-pressed rape core oil (25) is collected in a first oil fraction, that is not heated up beyond a first limit temperature during pressing, and in a second oil fraction, that is heated up to more than the limit temperature during pressing, wherein the limit temperature is between 40 and 50 °C.

6. Method of claim 5, **characterized in that** the low-hull fraction is pressed by means of a screw press (8) having a press screw (37) rotating about a horizontal rotation axis (38) and a sieve box (39) extending around the press screw (37), wherein, in an oil collection basin (40) arranged beneath the sieve box (39), a weir (41) running crosswise with regard to the rotation axis (38) is continuously shifted in direction of the rotation axis (38) such that it separates the first oil fraction (42) and the second oil fraction (43) of the cold-pressed rape core oil (25) in the oil collection basin (40) from one another, wherein, optionally, the weir is shifted in direction of the rotation axis (38) depending on a signal of at least one oil temperature sensor (45) arranged at the weir.

7. Method of any of the preceding claims, **characterized in that** the press cake (9) is broken up prior to supplying the pressurized steam (30).

8. Method of any of the preceding claims, **characterized in that** the organic solvent with which the collets are extracted to reduce the second residual oil content to 2 % by weight or less of the dry matter of the collets is hexane or alcohol of at least 95 %.

9. Method of any of the preceding claims, **characterized in that** the solvent-wet collets (46) are dried in a way conserving their porous structure, or subjected to a solvent exchange, wherein at least one exchanging solvent is used which is selected from pure alcohol and a water-alcohol azeotrope.

10. Method of any of the preceding claims, **characterized in that** the collets (46) that have been extracted with the organic solvent are extracted with an aqueous alcohol solution to obtain a purified rape protein concentrate (29), wherein the aqueous alcohol solution comprises 70 to 96 % by volume or 80 to 90 % by volume alcohol, wherein, optionally, the collets (46) are milled in the aqueous alcohol solution to form a suspension, and extracted in a counter-current flow.

11. Method of claim 10, **characterized in that** the aqueous alcohol solution is replaced by ethanol of at least 95 %.

12. Apparatus (1) for carrying out the method of processing grains (4) of a rapeseed according to any of the preceding claims, comprising
- dehulling rollers (5) forming a roller nip for dehulling the grains (4);
- a separation device arranged downstream of the roller nip and comprising at least one sieve or air separator for separating a low-hull grain fraction (6) from a high-hull grain fraction (31);
- flaking rollers (7) for rolling the low-hull grain fraction (6) to flakes,
- a screw press (8) for pressing cold-pressed rape core oil (25) from the flakes, wherein the screw press (8) puts out a press cake (9); and
- a returning device (34) configured for returning a part of the press cake to the screw press (8),
**characterized in**
- **that** an expander (14) for supplying pressurized steam (30) to the press cake (9) and for subsequently expanding the press cake (9) to form collets (46) is arranged downstream of the screw press (8), and
- **that** an extractor (15) which is configured for extracting the collets (46) with an organic solvent is arranged downstream of the expander, and
- **that** the return device (34) is configured for returning a part of the press cake (9) downstream of the expander (14).

13. Apparatus (1) of claim 12, **characterized in that** the return device (34) is configured for separating the part of the press cake (9), in front of and/or after the extraction with the organic solvent in the extractor (15), by sieving-off a particle fraction having a maximum particle size in a range from 4 to 6 mm of the collets (46).

14. Apparatus (1) of claim 12 or 13, **characterized in that** the return device (34) includes a cooling (35) which is configured for cooling the part of the press cake (9).

15. Apparatus (1) of any of the claims 12 to 14, **characterized in that** the screw press (8) comprises a press screw (37) rotating about a horizontal rotation axis (38) and a sieve box (39), wherein a weir (41), which extends crosswise with respect to the rotation axis (38) in an oil collection basin (40) arranged below the sieve box (39) and which separates an at first pressed first oil fraction (42) from a later pressed second oil fraction (43) of the cold-pressed rape core oil (25) in the oil collection basin (40) from one another, is shiftable in direction of the rotation axis (38), wherein, optionally, a drive (44) is provided which shifts the weir (41) in the direction of the rotation axis (38) depending on a signal of at least one oil temperature sensor (45) arranged at the weir (41).

## Revendications

1. Procédé de traitement de graines (4) de colza avec les étapes suivantes :
- décorticage des graines (4), dans lequel les graines (4) sont guidées à travers un interstice de laminage entre des rouleaux à graines (5) et séparation des coques d'une fraction de graine pauvre en coque (6) par tamisage et/ou séparation par ventilation, de sorte que les coques restant dans la fraction de graine pauvre en coque (6) ne représentent pas plus de 4 % en poids de la fraction de graine pauvre en coque (6) et
- pressage d'une huile de graines de colza (25) pressée à fruit de la fraction de graine pauvre en coque (6),
- dans lequel une teneur en eau de la fraction de graine pauvre en coque représente de 4 à 7 % en poids,
- dans lequel une température de tourteau dans un tourteau de pressage (9) qui en résulte est limitée à 70 °C,
- dans lequel une première teneur en huile résiduelle est réduite à 18 à 28 % en poids d'une masse sèche du tourteau de pressage et
- dans lequel une partie du tourteau de pressage (9) est recyclée, mélangée avec la fraction de graines pauvre en coques (6) avant le pressage puis à nouveau pressée,
**caractérisé en ce que**
- une vapeur d'eau saturée (30) est introduite dans le tourteau de pressage (9) et le tourteau de pressage (9) est ensuite expansé en collets (46), dans lequel la vapeur d'eau est dosée de sorte que le tourteau de pressage (9) est provisoirement chauffé sous l'action de la vapeur d'eau (30) à plus de 100 °C et les collets (46) présentent, après l'expansion, une température de 80 °C à 95 °C,
- les collets (46) sont extraits avec un solvant organique, dans lequel une deuxième teneur en huile résiduelle est réduite à 2 % en poids ou moins d'une masse sèche des collets (46) et
- la partie du tourteau de pressage (9) est recyclée après l'expansion.

2. Procédé selon la revendication 1, **caractérisé en ce que** la partie du tourteau de pressage (9) qui est recyclée après l'expansion est séparée des collets (46) avant et/ou après l'extraction, dans lequel la partie du tourteau de pressage (9) qui est recyclée après l'expansion est séparée des collets (46), en option par tamisage de petites particules.

3. Procédé selon l'une des revendications précédentes, **caractérisé en ce que** la partie du tourteau de pressage (9) qui est recyclée après l'expansion est refroidie avant le nouveau pressage à une température de l'ordre de 20 à 35 °C ou de 25 à 30 °C.

4. Procédé selon l'une des revendications précédentes, **caractérisé en ce que** la partie du tourteau de pressage (9) qui est recyclée après l'expansion représente 5 à 20 % en poids du tourteau de pressage (9).

5. Procédé selon l'une des revendications précédentes, **caractérisé en ce que** l'huile de graines de colza pressée à froid (25) est recueillie dans une première fraction d'huile, qui est chauffée pendant le pressage à une température non supérieure à une température limite, et dans une deuxième fraction d'huile, qui est chauffée pendant le pressage à une température supérieure à la température limite, dans lequel la température limite est entre 40 et 50 °C.

6. Procédé selon la revendication 5, **caractérisé en ce que** la fraction pauvre en coques est pressée avec une presse à vis sans fin (8), avec une vis sans fin de pressage (37) tournant autour d'un axe de rotation horizontal (38) et une enveloppe de tamisage (39) autour de la vis sans fin de pressage (27), dans lequel, dans un bac de collecte d'huile (40) disposé en dessous de l'enveloppe de tamisage (39), un déversoir (41) s'étendant transversalement par rapport à l'axe de rotation (38) est poussé de manière continue dans la direction de l'axe de rotation (38), de façon à séparer l'une de l'autre la première fraction d'huile (42) et la deuxième fraction d'huile (43) de l'huile de graines de colza pressée à froid (25) dans le bac de collecte d'huile (40), dans lequel le déversoir est poussé, optionnellement en fonction d'un signal d'au moins un capteur de température d'huile (45) disposé sur le déversoir, en direction de l'axe de rotation (38).

7. Procédé selon l'une des revendications précédentes, **caractérisé en ce que** le tourteau de pressage (9) est broyé avant l'introduction de la vapeur d'eau saturée (30).

8. Procédé selon l'une des revendications précédentes, **caractérisé en ce que** le solvant organique avec lequel les collets (46) sont extraits, afin de réduire la deuxième teneur en huile résiduelle à 2 % en poids ou moins de la masse sèche des collets (46), est de l'hexane ou un alcool à au moins 95 %.

9. Procédé selon l'une des revendications précédentes, **caractérisé en ce que** les collets (46) mouillés par le solvant sont séchés afin d'obtenir une structure poreuse ou soumis à un échange de solvants, dans lequel au moins un solvant d'échange est utilisé qui est sélectionné parmi de l'alcool pur et un azéotrope eau-alcool.

10. Procédé selon l'une des revendications précédentes, **caractérisé en ce que** les collets (46) extraits avec le solvant organique sont extraits avec une solution d'alcool aqueuse, afin d'obtenir un concentré de protéines de colza purifié (29), dans lequel la solution d'alcool aqueuse présente 70 à 96 % en volume ou 80 à 90 % en volume d'alcool, dans lequel les collets (46) sont broyés en option avec une solution d'alcool aqueuse afin d'obtenir une suspension et sont extraits dans un contre-courant.

11. Procédé selon la revendication 10, **caractérisé en ce que** la solution d'alcool aqueuse est refoulée avec de l'éthanol à au moins 95 %.

12. Dispositif (1) pour l'exécution du procédé de traitement de graines (4) de colza selon l'une des revendications précédentes avec
- un rouleau de décorticage (5) formant un interstice de laminage pour le décorticage des graines (4) ;
- un dispositif de séparation disposé en aval de l'interstice de laminage, avec au moins un tamis ou un séparateur aéraulique pour la séparation d'une fraction de graines pauvre en coques (6) d'une fraction de graines riche en coques (31) ;
- des rouleaux de floconnage (7) pour le laminage de la fraction de graines pauvre en coques (6) en flocons,
- une presse à vis sans fin (8) pour le pressage d'une huile de graines de colza pressée à froid (25) à partir des flocons, dans lequel la presse à vis sans fin (8) permet d'obtenir un tourteau de pressage (9) ; et
- un dispositif de retour (34), qui est conçu pour guider une partie du tourteau de pressage à nouveau vers la presse à vis sans fin (8),
**caractérisé en ce que**
- en aval de la presse à vis sans fin (8) est disposé un dispositif d'expansion (14) pour l'introduction d'une vapeur d'eau saturée (30) dans le tourteau de pressage (9) et pour l'expansion du tourteau de pressage (9) en collets (46) et
- en aval du dispositif d'expansion est disposé un extracteur (15) qui est conçu pour extraire les collets (46) avec un solvant organique et
- le dispositif de retour (34) est conçu pour guider une partie du tourteau de pressage (9) à nouveau vers le dispositif d'expansion (14).

13. Dispositif (1) selon la revendication 12, **caractérisé en ce que** le dispositif de retour (34) est conçu pour séparer la partie du tourteau de pressage (9) des collets (46), avant et/ou après l'extraction avec le solvant organique dans l'extracteur (15), par tamisage d'une fraction de particules avec une taille de particules maximale de l'ordre de 4 à 6 mm.

14. Dispositif (1) selon la revendication 12 ou 13, **caractérisé en ce que** le dispositif de retour (34) comprend un dispositif de refroidissement (35) qui est conçu pour refroidir une partie du tourteau de pressage (9).

15. Dispositif (1) selon l'une des revendications 12 à 14, **caractérisé en ce que** la presse à vis sans fin (8) comprend une vis sans fin de pressage (37) tournant autour d'un axe de rotation horizontal (38) et une enveloppe de tamisage (39), dans lequel, dans un bac de collecte d'huile (40) disposé en dessous de l'enveloppe de tamisage (39), un déversoir (41) s'étendant transversalement par rapport à l'axe de rotation (38), qui sépare l'une de l'autre une première fraction d'huile (42) pressée en premier et une deuxième fraction d'huile (43) pressée ensuite, de l'huile de graines de colza pressée à froid (25), dans le bac de collecte d'huile (40), peut être poussé en direction de l'axe de rotation (38), dans lequel, en option, un entraînement (44) est prévu qui pousse le déversoir (41) en fonction d'un signal d'au moins un capteur de température d'huile (45) disposé sur le déversoir (41) en direction de l'axe de rotation (38).
